# EUROPÄISCHE PATENTSCHRIFT

(11) **EP 3 138 902 B1**
(45) Veröffentlichungstag und Bekanntmachung des Hinweises auf die Patenterteilung: **30.11.2022**
(21) Anmeldenummer: 16187077.9
(22) Anmeldetag: 02.09.2016
(51) Int. Cl.: C12C 12/00, C12C 11/00, C12C 5/00, C12C 7/24

(54) **VERFAHREN UND VORRICHTUNG ZUM BEHANDELN ODER HERSTELLEN EINER WÜRZE BEI DER BIER- ODER GETRÄNKEHERSTELLUNG UND ENTSPRECHENDE VERWENDUNG**
METHOD AND DEVICE FOR TREATING OR PRODUCING A WORT IN BEER OR BEVERAGE MANUFACTURE AND CORRESPONDING USE
PROCEDE ET DISPOSITIF DE TRAITEMENT ET DE FABRICATION D'UN MOUT LORS DE LA FABRICATION DE BOISSONS OU DE BIERE ET UTILISATION CORRESPONDANTE

(30) Priorität: 04.09.2015 DE 102015114892; 15.10.2015 DE 102015117577
(43) Veröffentlichungstag der Anmeldung: 08.03.2017
(73) Patentinhaber: ZIEMANN HOLVRIEKA GmbH, 71636 Ludwigsburg (DE)
(72) Erfinder: Gehrig, Klaus, 71640 Ludwigsburg (DE); Wasmuht, Klaus Karl, 91792 Ellingen (DE); Ziller, Konstantin, 70806 Kornwestheim (DE); Becher, Tobias, 71701 Schwieberdingen (DE); Benninghaus, Tom, 71638 Ludwigsburg (DE)
(74) Vertreter: Kuhnen & Wacker Patent- und Rechtsanwaltsbüro PartG mbB

(56) Entgegenhaltungen:
- WO-A1-2014/060474
- DE-A1- 1 903 400
- DE-A1- 1 911 571
- DE-A1- 4 234 392
- DE-A1-102011 050 441
- DE-C- 181 581
- DE-C1- 19 602 167

## Beschreibung

Die Erfindung betrifft ein Verfahren zum Behandeln oder Herstellen einer Würze bei der Bier- oder Getränkeherstellung nach Anspruch 1, eine Vorrichtung zum Behandeln einer Würze bei der Bier- oder Getränkeherstellung nach Anspruch 9, und eine entsprechende Verwendung nach Anspruch 14.

### Stand der Technik

In der Vergangenheit sind bei der Herstellung von Würzen im Rahmen der Bier- oder Getränkeherstellung bisweilen nicht vollständig aufgeschlossene, insbesondere nicht iodnormale, Würzen aufgetreten. Die Ursachen hierfür werden in problematischen Rohstoffen, die während des Maischens nicht vollständig aufgeschlossen worden sind oder in dem Vorhandensein einer zu hohen Trübung, insbesondere einer Feintrübung, beim Abläutern der Würze vermutet. Hierbei scheinen Trübungen mit Partikelgrößenbereich von > 5 µm, insbesondere > 20 µm, eine hohe Durchgängigkeit durch beispielsweise die herkömmlichen Maischefilter zu haben und folglich nicht iodnormale Würzen zu verursachen. Ein zu hoher Iodwert kann beispielsweise zu Problemen bei der Filtration des gelagerten Bieres, insbesondere beim Einsatz von Membranfiltern, oder zu Qualitätseinbußen (Geschmacksstabilität, Alterungsbeständigkeit, Anfälligkeit auf mikrobiologischen Befall) beim fertigen Bier führen. Nicht aufgeschlossene Stärke führt zu Ausbeuteverlusten, welche einen Kostennachteil nach sich ziehen. Gerade neuartige Läutertechnologien, welche nicht auf dem Prinzip der Tiefenfiltration, wie sie bspw. beim herkömmlichen Läuterbottich Verwendung findet, sondern im Wesentlichen auf dem Prinzip der Oberflächenfiltration basieren, haben bisweilen das Problem von nicht iodnormalen Würzen, also nicht hinreichend abgebauter Stärke.

Zur Überwindung dieses Problems war man in der Vergangenheit oft gezwungen, aufwändig isolierte und gereinigte, künstliche und zumeist thermostabile Enzyme der Würze oder dem Bier zuzusetzen.

Nachteil dieser Praxis ist, dass die Verwendung der künstlichen Enzyme nicht dem natürlichen Charakter des Bieres entspricht und zudem nicht reinheitsgebotskonform ist. Darüber hinaus sind die Kosten für den Einsatz künstlicher Enzyme hoch, wodurch sich die Würzeherstellung verteuert. Darüber hinaus lassen sich mittels thermostabiler Enzyme nicht alle im Bereich der Würze- und Bierbereitung erforderlichen oder gewünschten Abbaureaktionen darstellen.

Gattungsgemäße Verfahren und Vorrichtungen zum Behandeln oder Herstellen einer Würze bei der Bier- oder Getränkeherstellung sind dem Fachmann aus den Dokumenten DE 196 02 167 C1, DE 19 03 400 A1 und DE 181 581 C bekannt.

### Aufgabe der Erfindung

Es ist daher eine Aufgabe der Erfindung, ein Verfahren und eine Vorrichtung bereitzustellen, mittels welchem bzw. welcher die Qualität der Würzen, insbesondere nicht iodnormaler oder im Wesentlichen nicht iodnormaler Würzen, verbessert wird und/oder die Sudhausausbeute gesteigert wird.

### Zusammenfassung der Erfindung

Die vorstehend definierte Aufgabe wird durch das Verfahren gemäß Anspruch 1 gelöst.

Dabei umfasst das Verfahren zum Behandeln oder Herstellen einer Würze bei der Bier- oder Getränkeherstellung, wenigstens die Schritte:
(a) nach Abschluss des Heißhaltens oder Kochens der Würze, Einstellen der Temperatur, insbesondere Kühlen, der Würze auf eine erste Temperatur zwischen40 und 55 °C oder zwischen 72 und 85 °C; und
(b) Zugeben wenigstens einer Portion enthaltend eine nicht über 80 °C, vorzugsweise nicht über 78 °C, vorzugsweise nicht über 76 °C, vorzugsweise nicht über 74 °C, vorzugsweise nicht über 72 °C, vorzugsweise nicht über 70 °C, vorzugsweise nicht über 68 °C, insbesondere nicht über 66 °C, erwärmte, zweite Würze, insbesondere einer Portion einer Vorderwürze, zur Würze. Die Würze weist beim Zugeben höchstens die erste Temperatur auf.

Das Verfahren umfasst vor dem Einstellen der Temperatur der Würze auf die erste Temperatur ferner die nachfolgenden Schritte:
Bereitstellen einer Maische;
Trennen der Maische zur Gewinnung der Würze, enthaltend eine Vorderwürze oder ein Gemisch aus der Vorderwürze und wenigstens einen Nachguss; wobei das Trennen der Maische (M) mittels Oberflächenfiltration erfolgt; und
Heißhalten oder Kochen der Würze.

Vorzugsweise kann die Würze erfindungsgemäß durch Abläutern einer Maische mit einer Abmaischtemperatur im Bereich von 60 bis 70 °C, vorzugsweise 62 bis 68 °C, insbesondere 63 bis 65 °C, gewonnen werden. Durch die β-Amylaseaktivität ist dabei die Verkleisterung weitgehend oder vollständig abgeschlossen, weshalb eine weitgehend oder vollständig verkleisterte Würze mit hohem Anteil an unverzuckerten Stärkebestandteilen vorliegt. Damit betrifft die vorliegende Erfindung vorzugsweise verkleisterte Würzen mit unverzuckerten Stärkebestandteilen, insbesondere einem hohen Anteil an unverzuckerten Stärkebestandteilen. Im Vergleich zu unverkleisterten Würzen sind verkleisterte Würzen aufgrund der β-Amylaseaktivität durch eine relativ geringe Viskosität gekennzeichnet.

Beim erfindungsgemäßen Verfahren erfolgt das Zugeben der wenigstens einen Portion des enzymhaltigen Substrats, vorzugsweise Maische/Maischeauszug/zweite Würze, vorzugsweise bei einer Temperatur, welche der ersten Temperatur entspricht oder höchstens 10 °C, vorzugsweise höchstens 8 °C, vorzugsweise höchstens 6 °C, insbesondere höchstens 4 °C, unter der ersten Temperatur liegt. Vorzugsweise ist das enzymhaltige Substrat ein filtriertes Substrat, insbesondere eine filtrierte Maische, zum Beispiel eine Vorderwürze.

Erfindungsgemäß wird ein derartiges Erwärmen des enzymhaltigen Substrats, das zu einer Inaktivierung einer relevanten Menge (beispielsweise > 25 %) desjenigen Enzyms oder derjenigen Enzyme führen würde, dessen bzw. deren katalytische Wirkung genutzt werden soll, vorzugsweise vermieden. Insbesondere wird das enzymhaltige Substrat nicht auf eine Temperatur erwärmt, die oberhalb der ersten Temperatur oder oberhalb 85 °C, vorzugsweise oberhalb 80 °C, vorzugsweise oberhalb 78 °C, vorzugsweise oberhalb 76 °C, vorzugsweise oberhalb 75 °C, vorzugsweise oberhalb 74 °C, vorzugsweise oberhalb 72 °C, vorzugsweise oberhalb 70 °C, vorzugsweise oberhalb 68 °C, vorzugsweise oberhalb 66 °C, vorzugsweise oberhalb 65 °C, insbesondere oberhalb 62 °C, liegt. Im Zuge der Erhaltung einer möglichst weitgehenden oder zumindest ausreichenden Enzymaktivität im enzymhaltigen Substrat kann es zudem besonders vorteilhaft sein, wenn eine Erwärmung desselben auf eine Temperatur oberhalb der ersten Temperatur vermieden wird.

Beim erfindungsgemäßen Verfahren wird die Würze nach dem herkömmlichen Heißhalten oder Kochen und vorzugsweise noch vor dem Klären, d. h. dem teilweisen oder vollständigen Abtrennen von Heißtrub oder anderen Feststoffen, beispielsweise im Whirlpool oder einer anderen Trenneinrichtung (Dekanter, Setzbottich usw.), auf eine vorbestimmte erste Temperatur zwischen 40 und 55 °C oder zwischen 72 und 85 °C eingestellt, insbesondere gekühlt. Erfindungsgemäß wird unter dem Begriff "nach dem Heißhalten oder Kochen der Würze" "nach Abschluss des Heißhaltens oder Kochens der Würze" verstanden. Dies bedeutet, dass erfindungsgemäß das enzymhaltige Substrat erst zugegeben wird, wenn der Vorgang der eigentlichen Wärmebehandlung der Würze im Sinne der klassischen Würzekochung/-heißhaltung in der Sudpfanne abgeschlossen ist und nicht mehr fortgesetzt wird. Die erfindungsgemäße enzymatische Behandlung nach dem Abschluss des Wärmebehandlungsschritts der Würze hat den Vorteil, dass alle bis zum Ende der Wärmebehandlung freigesetzten Stärkebestandteile dem enzymatischen Abbau zugänglich sind. Eine weitere Freisetzung von Stärkebestandteilen durch eine Fortsetzung der Wärmebehandlung im Sinne eines erneuten Erwärmens auf die Koch- oder Heißhaltetemperatur kann somit erfindungsgemäß vermieden werden.

Wenn im Schritt (a) die Würze auf eine Temperatur von höchstens 80 °C, insbesondere auf eine Temperatur zwischen 70 und 80 °C, eingestellt wird, wird es erstmals möglich, dass die Würze bei einer Temperatur vorliegt, bei der wenigstens ein Teil der im enzymhaltigen Substrat, vorzugsweise in einer Maische-Portion und/oder in einer Portion einer nicht über 80 °C erwärmten, zweiten Würze, insbesondere einer Portion Vorderwürze, natürlicherweise vorhandenen Enzyme aktiv und nicht temperaturbedingt denaturiert ist. So kann im Schritt (a) die Würze auf eine Temperatur von höchstens 55 °C (beispielsweise 40 bis 55 °C, insbesondere 45 bis 50 °C) eingestellt werden. Besonders vorteilhaft es hierdurch möglich, die Aktivität einer oder mehrerer Peptidasen zum Abbau von Gluten zu nutzen, um beispielsweise glutenfreie Getränke auf einfache und kostengünstig Weise zu erzeugen. Dabei kann es zudem vorteilhaft sein, wenn eine Erwärmung des enzymhaltigen Substrats auf eine Temperatur oberhalb der Temperatur von 55 °C, vorzugsweise 50 °C, vorzugsweise 45 °C, insbesondere 40 °C, vermieden wird.

Wenn im Schritt (a) die Würze dagegen auf eine Temperatur im Bereich von 80 bis 85 °C oder zumindest auf eine Temperatur oberhalb des üblichen Einsatzbereiches des betrachteten Enzyms (höchstens bis zur Temperatur des größten Stoffumsatzes pro Zeiteinheit, d.h. dem Temperatur- oder Wirkoptimum) eingestellt wird, kann zwar das Wirkoptimum der Enzyme im enzymhaltigen Substrat überschritten sein. Die Erfinder haben dennoch eine ausreichend hohe Enzymaktivität festgestellt, um einen quantitativ hinreichenden enzymatischen Abbau sicherzustellen, bevor die Enzymaktivität aufgrund der voranschreitenden, wärmebedingten Enzyminaktivierung zum Erliegen kommt. In Schritt (a) des erfindungsgemäßen Verfahrens besteht somit die Möglichkeit, die Temperatur der Würze auf eine Temperatur von 2 bis 20 °C, vorzugsweise 5 bis 15 °C, oberhalb des Temperaturoptimums eines für den Stoffabbau relevanten Enzyms, wie es bspw. in der weiter unten auf Seite 23 aufgeführten Tabelle genannt ist, einzustellen. Der besondere Vorteil dieser Vorgehensweise ist, dass eine gezielte Inaktivierung des jeweils betrachteten Enzyms oder der betrachteten Enzyme quasi zugleich oder im Anschluss an den Abbau erzielt wird, ohne dass ein nochmaliges Erwärmen der Würze zur gezielten Inaktivierung erforderlich wäre. Hierdurch wird der Verfahrensablauf vereinfacht, und ein nochmaliges Erwärmen der Würze entfällt. Zudem wird bei dieser Vorgehensweise der zwischen den eingesetzten Medien, wie beispielsweise Würze und Wärmeträger bzw. Kälteträger, zu übertragende Wärmestrom gegenüber einer weitergehenden Abkühlung der Würze auf oder insbesondere unterhalb des Temperaturoptimums des betrachteten Enzyms verringert, wodurch sich die Handhabung des Verfahrens vereinfacht. Weiter resultiert hieraus eine geringere Komplexität des Verfahrens zur Rückgewinnung von Wärme aus der zuvor wärmebehandelten Würze und der hierzu eingesetzten Vorrichtung.

Ferner wird erfindungsgemäß wenigstens eine Portion der nicht über 80 °C erwärmten, zweiten Würze, insbesondere einer Portion einer Vorderwürze, der auf diese Weise auf die erste Temperatur eingestellten, insbesondere vorgekühlten, Würze zugegeben. Hierdurch können die natürlicherweise im zugegebenen Substrat enthaltenen Enzyme in der bereits wärmebehandelten und damit enzyminaktiven Würze wirken, um den Abbau von hochmolekularen Substanzen, wie beispielsweise der Stärke, weiter voranzutreiben und möglichst zu vervollständigen. Hierdurch kann vorteilhaft einem unzureichenden Aufschluss und/oder unzureichenden Abbau beim Maischen entgegengewirkt werden. Ferner können die möglichen Wirkungen einer beim Abläutern in die Würze übergegangenen Fein- oder Feinstrübung, welche im weiteren Verfahren der Bier- oder Getränkeerzeugung problematisch sein kann, wenigstens teilweise vermieden werden. Darüber hinaus können vorteilhaft die Nachteile eines knapp gelösten Malzes zumindest zu einem gewissen Grad ausgeglichen werden.

Die Verwendung eines Maischeauszugs gegenüber einer Maische als Zugabe zur Würze ist aufgrund des verringerten Feststoffgehalts des Maischeauszugs gegenüber der Maische vorteilhaft.

Indem eine Maischeportion (oder ein daraus hergestellter Maischeauszug) bei einer vorgegebenen Temperatur während des Maischverfahrens gezogen wird, kann auf einfache Weise gesteuert werden, welche Arten von Enzyme in der Maische aktiv sind. Da die gezogene Portion der Maische gerade nicht den hohen Temperaturen bei der Behandlung der Würze, d. h. Kochung oder wenigstens Heißhaltung, ausgesetzt wird, sind die darin enthaltenen Enzyme noch beim erfindungsgemäßen Zugeben der Portion nach dem vorstehend beschriebenen Einstellen der Temperatur, insbesondere Vorkühlen, auf höchstens 85 °C, vorzugsweise höchstens 80 °C, im Anschluss an die Wärmebehandlung der Würze aktiv und bleiben auch in einer derart temperierten/vorgekühlten Würze hinreichend lange aktiv, ohne temperaturbedingt denaturiert zu werden. Entsprechendes gilt für den Maischeauszug und die nicht über 80 °C erwärmte, zweite Würze, insbesondere für die Vorderwürze. Dabei ist dem Fachmann klar, dass die zugegebene Portion des enzymhaltigen Substrats (bspw. Maische, Maischeauszug und Würze oder Vorderwürze) von deren Gewinnung bis zur Zugabe nicht derart erwärmt oder anderweitig behandelt werden sollte, dass eine mehr als unwesentliche Inaktivierung (beispielsweise > 25 %) der jeweils als relevant erachteten Enzyme stattfindet. Vorzugsweise wird die zugegebene Portion des enzymhaltigen Substrats nicht auf eine Temperatur höher als die erste Temperatur, jedenfalls nicht über 80 °C, erwärmt.

So können die mit der nach der Würze-Temperierung/Vorkühlung durch die Zugabe der Portion des enzymhaltigen Substrats (bspw. Maische/Maischeauszug/zweite Würze) zugegebenen Enzyme für eine vorbestimmte Zeitspanne auf deren Zielsubstanzen in der Würze einwirken und beispielsweise den Abbau von in der Würze vorhandenen Stärkeresten bis zur Iodnormalität vorantreiben.

Der Vorteil der erfindungsgemäßen Enzymzusetzung zur bereits gekochten oder heiß gehaltenen und anschließend auf eine bestimmte Temperatur temperierten/vorgekühlten Würze in Gestalt einer nicht über 80 °C wärmebehandelten Portion des enzymhaltigen Substrats (bspw. Maische/Maischeauszug/Würze) liegt in der vergleichbar schnellen enzymatischen Umsetzung der Zielsubstanzen in der Würze aufgrund der verhältnismäßig hohen Temperatur, insbesondere im Bereich des Temperaturoptimums des jeweils betrachteten Enzyms. Hierzu kann die erste Temperatur vorzugsweise auf das Temperaturoptimum des jeweils betrachteten Enzyms einstellt werden (vgl. bspw. Tabelle auf Seite 23 dieser Anmeldung). Dies führt vorteilhaft zu einer Verkürzung der bisherigen Läuterzeit, da diese nicht mehr als Enzymeinwirkungszeit benötigt wird.

Nach dem erfindungsgemäßen Verfahren ist es zudem möglich, nicht nur eine einzige Portion des enzymhaltigen Substrats (bspw. einer Maische oder eines Maischeauszugs oder einer nicht über 80 °C erwärmten, zweiten Würze/Vorderwürze) der Würze zuzugeben. So können vorteilhaft unterschiedliche Portionen des enzymhaltigen Substrats, beispielsweise der Maische, welche bei verschiedenen Temperaturen aus der Maische gezogen wurden, oder Maischeportionen, welche aus unterschiedlichen Maischechargen stammen können, der Würze erfindungsgemäß zugegeben werden. Hierdurch gelingt es, Maischefraktionen mit definierten Mengen an aktiven Enzymen mit unterschiedlichen Temperaturoptima für die Behandlung der vorgekühlten bzw. temperierten Würze einzusetzen. Dabei können die Portionen oder Fraktionen separat oder als Gemisch der Würze zugegeben werden. Das vorstehend beschriebene gilt analog auch für die Verwendung von mehreren Maischeauszügen, nicht über 80 °C erwärmter, zweiter Würzen, insbesondere Vorderwürzen, oder Gemischen derselben. Die erste Temperatur kann unter Berücksichtigung der Temperaturoptima des ausgewählten Enzyms oder der ausgewählten Enzyme eingestellt werden.

Mit dem erfindungsgemäßen Verfahren gelingt es dank der zusätzlichen Einwirkung der vorzugsweise malz- oder rohstoffeigenen Enzyme, den Abbau rohstoff- oder verarbeitungsbedingt problematischer Würzen, die bisher beispielsweise nicht iodnormal waren, problemlos bis zur Erzielung des gewünschten Abbaugrades, beispielsweise der Iodnormalität, voranzutreiben. Damit erübrigt sich einerseits die Zugabe teurer, auf künstlichem Wege isolierter und aufgereinigter Enzympräparate. Andererseits behält die Würze durch die verbesserte Ausnutzung ausschließlich malzeigner Enzyme ihren natürlichen Charakter, da auf die Zugabe malzfremder Enzympräparate vollständig verzichtet werden kann.

Ein weiterer Vorteil des erfindungsgemäßen Verfahrens ist, dass nicht nur iodnormale Würzen erzielt werden können, sondern auch die Ausbeute an vergärbaren Zuckern, wie bspw. Maltose, gesteigert werden kann, also ein Extraktgewinn erzielbar ist. So haben die Erfinder festgestellt, dass die Ausbeute an vergärbarem Extrakt um wenigstens 4 bis 12 % durch das erfindungsgemäße Verfahren steigern lässt. Hierdurch wird die Sudhausausbeute insgesamt gesteigert und die einzusetzende Rohstoffmenge bzw. die Rohstoffkosten gesenkt.

Vorteilhafte Weiterbildungen des erfindungsgemäßen Verfahrens sind Gegenstand der abhängigen Ansprüche 2 bis 8.

Das Verfahren kann ferner den Schritt des wenigstens teilweisen Klärens der Würze umfassen. Dabei kann das Zugeben gemäß Schritt (b) bevorzugt vor dem wenigstens teilweisen Klären der Würze erfolgen.

Folglich kann die Dauer der Heißtrubabtrennung, also beispielsweise die Aufenthaltszeit der Würze im Whirlpool, welche herkömmlich ohnehin stattfindet, für die Vervollständigung des enzymatischen Abbaus genutzt werden. Zwar kann eine weitere enzymatische Umsetzung auch noch nach der Würzetemperierung/-kühlung auf beispielsweise Anstelltemperatur stattfinden, jedoch ist die Geschwindigkeit dieser Umsetzung aufgrund der gegenüber dem Whirlpoolschritt gewöhnlich wesentlich niedrigeren Temperatur der Würze erheblich verringert, so dass die Umsetzung ggf. nur unvollständig ist.

Das Verfahren ist jedoch nicht hierauf beschränkt. So kann das Zugeben alternativ oder zusätzlich während und/oder nach dem wenigstens teilweisen Klären der Würze erfolgen.

Das erfindungsgemäße Verfahren kann vor dem Einstellen, insbesondere Kühlen, der Würze auf die erste Temperatur ferner wenigstens einen der nachfolgenden Schritte umfassen: Bereitstellen einer Maische; Trennen der Maische zur Gewinnung der Würze, enthaltend eine Vorderwürze oder ein Gemisch aus der Vorderwürze und wenigstens einem Nachguss; und Heißhalten oder Kochen der Würze. Dabei kann das Trennen der Maische insbesondere durch eine herkömmliche Vorrichtung wie ein Läuterbottich, ein Maischefilter, ein Strainmaster, ein Trommelfilter, Scheibenfilter oder Tellerfilter, eine Siebbandpresse, oder eine anderes Läutergerät, vorzugsweise eines, welche überwiegend oder vollständig auf dem Prinzip der Oberflächenfiltration (Siebeffekt) und nicht oder im Wesentlichen nicht auf dem Prinzip der Tiefenfiltration (Filterbett enthaltend Filtermittel) beruht, wie insbesondere ein Siebfilter, erfolgen. Das Trennen der Maische erfolgt vorzugsweise mittels einer Filtration, insbesondere mittels einer Oberflächenfiltration oder Siebfiltration. Dabei kann die Filterwirkung überwiegend, im Wesentlichen oder vollständig auf einem Siebeffekt beruhen.

Nach dem Zugeben gemäß Schritt (b) und/oder Klären kann das Verfahren ferner den Schritt des Kühlens der Würze auf eine zweite Temperatur zwischen der ersten Temperatur und 0 °C aufweisen.

Damit lässt sich das erfindungsgemäße Verfahren problemlos in ein herkömmliches Verfahren zur Würzeerzeugung integrieren. Besonders vorteilhaft ist dabei, wenn die zugegebene Portion oder zugegebenen Portionen bei der Durchführung desselben Würzeherstellungsverfahrens gewonnen werden können, so daß keine gesonderte Quelle für die zugegebenen Portionen erforderlich ist.

Ferner kann die erste Temperatur in einem Bereich von 45 bis 50 °C; vorzugsweise 80 bis 85 °C; vorzugsweise 72 bis 78 °C, vorzugsweise 72 bis 76 °C, vorzugsweise 73 bis 75 °C, insbesondere bei etwa 74 °C, oder im Bereich von 78 bis 85 °C, vorzugsweise 78 bis 84 °C, vorzugsweise 80 bis 85 °C, insbesondere 80 bis 83 °C, liegen.

Durch eine Temperierung oder Kühlung der Würze auf eine Temperatur in einem Bereich von 50 bis 80 °C, insbesondere 70 bis 80 °C, vor der Zugabe der Portion des enzymatischen Substrats (bspw. Maische/Maischeauszug/Würze) wird eine thermisch bedingte Deaktivierung beispielsweise des in der Portion enthaltenden Enzyms α-Amylase vermieden. Gleichzeitig enthält der gewählte Bereich das Temperaturoptimum der α-Amylase, so dass eine hohe Geschwindigkeit der enzymatischen Reaktion beim Abbau vorhandener Stärke erzielt wird. Durch diese zusätzliche α-Amylase-Aktivität wird der Abbau der Stärke vorangetrieben und letztlich die Iodnormalität erzielt.

In entsprechender Weise können je nach Problemstellung auch die Temperaturoptima anderer im enzymatischen Substrat (bspw. Maische, Würze oder Vorderwürze) enthaltenen Enzyme für die Bestimmung der ersten Temperatur berücksichtigt werden (vgl. auch Übersicht in nachstehender Tabelle auf Seite 23). Hierdurch ist es erfindungsgemäß möglich, auch die Aktivität anderer Enzyme für einen optimalen Abbau von hochmolekularer Substanz in der Würze auszunutzen.

Zudem kann das Verfahren ferner den Schritt umfassen, dass nach der Zugabe gemäß Schritt (b) und Verstreichenlassen einer vorgegebenen Zeitspanne die Würze auf eine dritte Temperatur zwischen 82 und 99 °C, vorzugsweise zwischen 82 und 95 °C, vorzugsweise zwischen 82 und 90 °C, insbesondere zwischen 82 und 85 °C, erwärmt wird.

Mit dem Verstreichenlassen einer vorgegebenen Zeitspanne wird sichergestellt, dass ausreichend Zeit für die enzymatische Umsetzung gegeben ist. Dabei bestimmen sowohl die Zusammensetzung des Ausgangsmaterials Würze als auch das jeweilige Enzym und weitere Randbedingungen, wie beispielsweise die Temperatur der Würze, die minimal erforderliche und optimale Einwirkzeit. Durch den zusätzlichen Erwärmungsschritt kann die Aktivität der mit der Zugabe hinzugefügten Enzyme durch thermische Inaktivierung definiert beendet oder zumindest verringert werden. Hierdurch wird die Steuerung der enzymatischen Aktivitäten weiter verbessert. Dabei erfolgt das Erwärmen vorzugsweise nach der Klärung der Würze. Hierbei kann die Zeit während des Klärens, beispielsweise im Whirlpool, vorteilhaft zur Einwirkung der Enzyme, beispielsweise für einen weitergehenden Stärkeabbau, genutzt werden. Das Halten der erhöhten dritten Temperatur der Würze ist nur solange erforderlich, bis die betreffende Enzymart in der Würze vollständig oder zu einem ausreichenden Grad inaktiviert wurde.

Als Einwirkdauer für die Enzyme bzw. vorgegebene Zeitspanne kann vorzugsweise eine Dauer von bis zu 60 min, vorzugweise 3 bis 30 min, insbesondere 5 bis 25 min, gewählt werden. Eine derartige Einwirkdauer sichert einerseits eine im Wesentlichen vollständige enzymatische Umsetzung bzw. deren Komplettierung, andererseits wird durch die Beschränkung der Dauer eine mögliche thermische Belastung der Würze verkleinert.

Des Weiteren kann das Verhältnis des Volumens der zugegebenen, wenigstens einen Portion zum Pfanne-voll-Volumen der vor Schritt (a) nach Anspruch 1 vorhandenen Würze in einem Bereich von 0,1 bis 30 %, vorzugsweise 0,5 bis 20 %, vorzugsweise von 1 bis 5 %, vorzugsweise von 1 bis 3 %, insbesondere bei etwa 2 %, liegen.

Wie beispielhafte Untersuchungen der Erfinder zur Erzielung einer iodnormalen Würze gezeigt haben, reicht eine Zugabe einer nicht über 80 °C erwärmten, zweiten Würze, vorzugsweise einer Vorderwürze, in einem Volumenverhältnis zum Pfanne-voll-Volumen der Würze im Bereich von 1 bis 5 % aus, um eine hinreichende Wirkung der darin enthaltenen α-Amylase zu erzielen und nach spätestens 15 bis 20 Minuten Einwirkzeit (bei einer ersten Temperatur von 74 °C) die Iodnormalität der Würze zu erreichen (vgl. nachstehend diskutierte Untersuchungsergebnisse).

Die wenigstens eine Portion der nicht über 80 °C erwärmten, zweiten Würze, vorzugsweise der Vorderwürze, oder ein Gemisch aus wenigstens zwei dieser Portionen kann/können vor dem Zugeben zwischengelagert werden.

Das Zwischenlagern ermöglicht es, die enzymhaltige Portion der Maische, des Maischeauszugs und/oder der zweiten Würze/Vorderwürze zu einem beliebigen Zeitpunkt später zur Behandlung einer Würze einzusetzen, beispielsweise vor, während und/oder nach einer Whirlpoolrast oder eines anderen Trennschritts. Hierdurch steigt die zeitliche Flexibilität bei der Anwendung des erfindungsgemäßen Verfahrens. Das Zwischenlagern in beispielsweise einem einzigen Speichergefäß macht es zudem möglich, auf einfache Weise und kostengünstig ein Gemisch von verschiedenen Maisch- und/oder Würze-/Vorderwürzeportionen zu erzeugen und für die spätere Verwendung zu lagern. Bei Vorsehen mehrerer Speichergefäße wird die Flexibilität der Handhabung vorteilhaft weiter verbessert.

Das Einstellen der Temperatur, insbesondere Kühlen, der Würze auf die erste Temperatur und/oder das Kühlen der Würze auf die zweite Temperatur und/oder das Erwärmen der Würze auf die dritte Temperatur können in demselben Wärmeüberträger durchgeführt werden.

Indem möglichst alle Kühl- und ggf. Erwärmungsschritte in demselben Wärmeüberträger durchgeführt werden, wird der apparative Aufwand bei der Verwirklichung des erfindungsgemäßen Verfahrens und damit die erforderliche Anlageninvestitionen minimiert.

Vorrichtungstechnisch wird die erfindungsgemäße Aufgabe durch die Vorrichtung nach Anspruch 9 gelöst.

Dabei wird eine Vorrichtung zum Behandeln oder Herstellen einer Würze bei der Bier- oder Getränkeherstellung, vorzugsweise zur Durchführung des erfindungsgemäßen Verfahrens, beansprucht, welche wenigstens aufweist: eine Einrichtung zum Trennen einer Maische zur Gewinnung der Würze, wobei die Einrichtung ein Läutergerät ist, bei welchem das Trennen der Maische überwiegend oder vollständig auf dem Prinzip der Oberflächenfiltration beruht; eine Einrichtung zum Einstellen der Temperatur, insbesondere Kühlen, der Würze auf eine erste Temperatur zwischen 40 und 55 °C oder zwischen 72 und 85 °C nach dem Abschluss des Heißhaltens oder Kochens der Würze; und eine Einrichtung zum Zugeben einer Portion enthaltend eine nicht über 80 °C erwärmte, zweite Würze, vorzugsweise einer Portion einer Vorderwürze, zu der nach dem Einstellen, insbesondere Kühlen, auf die erste Temperatur erhaltene Würze. Dabei ist die Einrichtung zum Temperieren oder Kühlen stromabwärts zu einer Einrichtung zum Heißhalten oder Kochen der Würze angeordnet. Die Einrichtung zum Zugeben ist stromabwärts zur Einrichtung zum Einstellen der Temperatur, insbesondere Kühlen, der Würze auf die erste Temperatur angeordnet.

Die Vorteile des erfindungsgemäßen Verfahrens gelten analog für die erfindungsgemäße Vorrichtung. Dabei kann vorteilhaft auf herkömmliche Vorrichtungskomponenten, wie beispielsweise Plattenkühler als Wärmeüberträger für die Würzekühlung oder - erwärmung zurückgegriffen werden. Insgesamt kann die Erfindung damit mit einem minimalen apparativen Zusatzaufwand, insbesondere bei der Nachrüstung von bereits bestehenden Sudanlagen, verwirklicht werden.

Vorteilhafte Ausführungsformen der erfindungsgemäßen Vorrichtung sind Gegenstand der abhängigen Ansprüche 10 bis 13. Die Vorteile entsprechen denen der korrespondierenden Verfahrensmerkmale.

So kann die Einrichtung zum Zugeben der wenigstens einen Portion stromaufwärts zu einer Einrichtung zum Klären der Würze angeordnet sein.

Die Erfindung ist aber nicht hierauf beschränkt. Die Einrichtung kann auch stromabwärts zu oder im Bereich der Einrichtung zum Klären der Würze angeordnet sein. Hierbei bedeutet "im Bereich einer Einrichtung zum Klären der Würze", dass die Einrichtung zum Zugeben derart in, an oder bei der Einrichtung zum Klären angeordnet ist, dass eine Zugabe der Portion oder der Portionen des enzymhaltigen Substrats, vorzugsweise der Maische, des Maischeauszugs, der Würze/Vorderwürze, zur temperierten oder vorgekühlten Würze möglich ist, während sich die auf die erste Temperatur temperierte oder vorgekühlte Würze in der Kläreinrichtung befindet und/oder in diese ein- oder aus dieser ausströmt.

In einer vorteilhaften Ausführungsform kann die erfindungsgemäße Vorrichtung ferner wenigstens eine der nachfolgenden Einrichtungen aufweisen: eine Einrichtung zum Herstellen einer Maische; eine Einrichtung zum Trennen der Maische zur Gewinnung einer Würze, enthaltend eine Vorderwürze oder ein Gemisch aus der Vorderwürze und wenigstens einem Nachguss; eine Einrichtung zum Heißhalten oder Kochen der in der Trenn-Einrichtung erzeugten Würze; eine Einrichtung zum Klären der Würze; eine Einrichtung zum Kühlen der in der Klär-Einrichtung behandelten Würze auf eine zweite Temperatur zwischen der ersten Temperatur und 0 °C. Dabei kann die Einrichtung zum Zugeben stromaufwärts zur Klär-Einrichtung angeordnet sein. Ferner kann dabei die Einrichtung zum Trennen der Maische eine herkömmliche Vorrichtung sein, wie bspw. ein Läuterbottich, ein Maischefilter, ein Strainmaster, ein Trommelfilter, Scheibenfilter oder Tellerfilter oder eine Siebbandpresse. Alternativ kann das Trennen auch durch jedes andere Läutergerät, vorzugsweise eines, welche überwiegend oder vollständig auf dem Prinzip der Oberflächenfiltration (Siebeffekt) und nicht oder im Wesentlichen nicht auf dem Prinzip der Tiefenfiltration (Filterbett enthaltend Filtermittel) beruht, wie insbesondere ein Siebfilter, erfolgen.

Darüber hinaus kann die Vorrichtung ferner eine Einrichtung zum Erwärmen der Würze auf eine dritte Temperatur zwischen 82 und 99 °C, vorzugsweise zwischen 82 und 95 °C, vorzugsweise zwischen 82 bis 90 °C, insbesondere zwischen 82 bis 85 °C, aufweisen. Dabei kann die Erwärmungs-Einrichtung stromabwärts zur Einrichtung zum Zugeben und vorzugsweise stromabwärts zur Einrichtung zum Klären angeordnet ist.

Die Einrichtung zum Erwärmen erlaubt eine kontrollierte Inaktivierung der mit der wenigstens einen Portion zugegebenen Enzyme. Die Einrichtung zum Erwärmen kann vorteilhaft in die Einrichtung zum Einstellen der Temperatur, insbesondere Kühlen, der Würze integriert sein (z. B. einstückige Ausführung), wodurch der apparative Aufwand minimiert wird. Oder sie kann eine davon separate Einrichtung sein.

Bei der Anordnung der Einrichtung zum Erwärmen der Würze auf die dritte Temperatur stromabwärts zur Klär-Einrichtung kann die Dauer des Klärens vorteilhaft zur Enzymeinwirkung genutzt werden, bevor eine gezielte thermische Inaktivierung erfolgt.

Die Vorrichtung ist jedoch nicht hierauf beschränkt. So kann die Erwärmungs-Einrichtung auch stromaufwärts zur oder im Bereich der Einrichtung zum Klären der Würze angeordnet sein, wobei hier die vorstehende Erklärung zum Begriff "im Bereich" analog gilt.

Zudem kann die erfindungsgemäße Vorrichtung ferner wenigstens eine Einrichtung zum Abziehen und/oder Speichern der wenigstens einen Portion enthaltend eine nicht über 80 °C erwärmte, zweite Würze, vorzugsweise der Portion der Vorderwürze, aufweisen.

Der Vorteil einer Speicher- oder Lagermöglichkeit wurde bereits vorstehend bei dem analogen Verfahrensmerkmal diskutiert. Dabei kann ein Speicher vorzugsweise so ausgebildet sein, dass er die Sedimentation von in der Maische und ggf. in der Würze vorhandenen Feststoffpartikel unterstützt. Weiterhin ist der Speicher vorzugsweise isoliert und/oder beheizbar. Hier ist beispielsweise eine zylindrokonische Gestalt des Speichergefäßes oder der Speichergefäße vorteilhaft.

Schließlich wird die erfindungsgemäße Aufgabe auch durch die erfindungsgemäße Verwendung nach Anspruch 14 gelöst. Die Vorteile des erfindungsgemäßen Verfahrens und der erfindungsgemäßen Vorrichtung gelten analog für die erfindungsgemäße Verwendung.

Die erfindungsgemäße Verwendung umfasst eine Verwendung einer Einrichtung zum Einstellen der Temperatur, insbesondere Kühlen, einer Würze auf eine erste Temperatur zwischen 40 und 55 °C oder zwischen 72 und 85 °C, vorzugsweise zwischen 45 und 50 °C, vorzugsweise zwischen 72 und 78 °C, vorzugsweise zwischen 72 und 76 °C, vorzugsweise zwischen 73 und 75 °C, insbesondere bei etwa 74 °C, oder zwischen 78 und 85 °C, vorzugsweise zwischen 78 und 84 °C, vorzugsweise zwischen 80 und 85 °C, insbesondere zwischen 80 und 83 °C, nach dem Heißhalten oder Kochen der Würze; und einer Einrichtung zum Zugeben wenigstens einer Portion enthaltend eine nicht über 80 °C erwärmte, zweite Würze, insbesondere einer Portion einer Vorderwürze, zur Würze nach dem Einstellen der Temperatur, insbesondere Kühlen, der Würze auf die erste Temperatur. Dabei weist die Würze beim Zugeben höchstens die erste Temperatur auf.

Bevorzugt findet die erfindungsgemäße Verwendung in einem Verfahren zum Behandeln oder Herstellen der Würze bei der Bier- oder Getränkeherstellung statt.

In einer bevorzugten Ausführungsform erfolgt das Zugeben aus den vorstehend gennannten Gründen bevorzugt vor dem wenigstens teilweisen Klären der Würze. Die Erfindung ist jedoch nicht hierauf beschränkt. So kann alternativ oder zusätzlich das Zugeben auch während oder nach dem wenigstens teilweisen Klären der Würze erfolgen.

Die Erfinder haben ferner in Laborversuchen festgestellt, dass sich durch das erfindungsgemäße Verfahren oder die erfindungsgemäße Vorrichtung bzw. deren entsprechende Verwendung zudem eine beträchtliche Ausbeuteerhöhung, insbesondere bei nicht iodnormalen Würzen, erzielt werden kann. Hierzu wurde eine Würze hergestellt, wobei eine herkömmliche Maische mittels eines Siebfilters von Grobpartikeln befreit wurde. Die resultierende Würze wies eine mit dem Auge deutlich wahrnehmbare Feintrübung auf, welche als Bodensatz sedimentierte. Vom klaren Überstand wie auch vom trüben Bodensatz wurden je 200 ml entnommen und auf eine erste Temperatur von 74 °C (Temperaturoptimum der α-Amylase) eingestellt. Zu diesen Würzeproben wurden je 5 ml einer Kongressmaische (2,5 Vol.-%) zugegeben und homogenisiert. Die Kongressmaische wurde zuvor im Labormaßstab nach dem üblichen Verfahren hergestellt. Nach einer Einwirkzeit von 10 min bei 74 °C wurden der Extraktgehalt (°P) und der Iodwert (E) mittels Routineverfahren bestimmt. Die Ergebnisse der Untersuchung sind in nachfolgender Tabelle zusammengestellt:

| **Probe** | **Extrakt (°P)** | **Zugewinn (%)** | **Iodwert (E)** |
|---|---|---|---|
| Kongressmaische (Zugabe) | 14,40 | - | - |
| Würze (Nullprobe, unbehandelt) | 14,14 | - | 1,82 |
| Würze (klarer Überstand) mit Kongressmaischezugabe | 15,66 | + 11 | 0,1 |
| Würze (trüber Bodensatz) mit Kongressmaischezugabe | 15,19 | +7,4 | 0,3 |

Wie der vorstehenden Tabelle zu entnehmen ist, ist die wie vorstehend beschrieben gewonnene Würze mit einem Iodwert von 1,28 nicht iodnormal (Richtwert für Iodnormalität ist eine Extinktion (E) der photometrischen Untersuchung von < 0,45). Dagegen bewirkt die erfindungsgemäße Zugabe der Kongressmaischeprobe zur Würze in einem Umfang von 2,5 Vol.-% bei einer Temperatur von 74 °C und eine Einwirkzeit von 10 min eine Herabsetzung des Iodwerts auf 0,3 (trübe Würze mit Bodensatz) bzw. auf 0,1 (Würze aus klarem Überstand). Folglich gelingt es durch die Anwendung der Erfindung, nicht iodnormale Würzen in iodnormale Würzen zu überführen.

Darüber hinaus konnten die Erfinder bei den erfindungsgemäß behandelten Würzen einen Zugewinn an Extrakt gegenüber der unbehandelten Würze um wenigstens 7 % bei der Würze aus trüben Bodensatz und sogar um 11 % bei der Würze, welche aus dem klaren Überstand gewonnen wurde, feststellen. Diese erhebliche Zunahme an Extrakt, welche auf die erfindungsgemäße Behandlung zurückzuführen ist, liegt vermutlich an dem verbesserten Abbau der in die Würze bei deren Gewinnung übergegangen Stärkemoleküle, welche für die mangelnde Iodnormalität verantwortlich sind. Diese werden vermutlich in vergärbare Zucker überführt, sodass einerseits die Iodnormalität erzielt wird und gleichzeitig der Extraktgehalt steigt, wodurch die Sudhausausbeute steigt und die Herstellungskosten sinken.

### Alternativen und weitere Offenbarung der Erfindung

Alle in dieser Anmeldung in Zusammenhang mit dem erfindungsgemäßen Verfahren bzw. der erfindungsgemäßen Vorrichtung offenbarten Merkmale und spezifischen Beschränkungen sind miteinander beliebig kombinierbar, soweit technisch realisierbar. Insbesondere sind die offenbarten Merkmale und spezifischen Beschränkungen auch mit den nachfolgend beschriebenen Verfahren bzw. Vorrichtungen kombinierbar.

Das erfindungsgemäße Verfahren kann als ein Verfahren zum Behandeln, vorzugsweise zum Herstellen, einer Würze bei der Bier- oder Getränkeherstellung, ausgebildet sein, wenigstens mit den Schritten:
(a) Herstellen einer Maische;
(b) Trennen der in Schritt (a) hergestellten Maische zur Gewinnung einer Würze, enthaltend eine Vorderwürze oder ein Gemisch aus der Vorderwürze und wenigstens einem Nachguss;
(c) Heißhalten oder Kochen der in Schritt (b) erhaltenen Würze;
(d) nach Abschluss des Heißhaltens oder Kochens der Würze, Einstellen der Temperatur, insbesondere Kühlen der in Schritt (c) erhaltenen Würze auf eine erste Temperatur zwischen 40 und 55 °C oder zwischen 72 und 85 °C;
(e) Zugeben wenigstens einer Portion eines enzymhaltigen Substrats, vorzugsweise wenigstens einer Portion einer Maische, vorzugsweise der in Schritt (a) hergestellten Maische, und/oder wenigstens einer Portion wenigstens eines Maischeauszugs, vorzugsweise wenigstens eines Maischeauszugs hergestellt aus der in Schritt (a) hergestellten Maische, und/oder einer Portion enthaltend eine nicht über 80 °C erwärmte, zweite Würze, vorzugsweise einer Portion einer Vorderwürze, vorzugsweise der in Schritt (b) erhaltenen Vorderwürze, oder vorzugsweise eines Gemischs aus wenigstens zwei dieser Portionen, zu der nach Schritt (d) erhaltenen Würze,
   wobei die Würze beim Zugeben höchstens die erste Temperatur aufweist;
(f) wenigstens teilweises Klären der Würze; und
(g) Kühlen der Würze auf eine zweite Temperatur zwischen der ersten Temperatur und 0 °C;
   wobei das Zugeben gemäß Schritt (e) vor, während oder nach dem wenigstens teilweisen Klären der Würze gemäß Schritt (f) erfolgt.

Die erfindungsgemäße Vorrichtung kann als eine Vorrichtung zum Behandeln, vorzugsweise zum Herstellen, einer Würze, bei der Bier- oder Getränkeherstellung, vorzugsweise zur Durchführung des erfindungsgemäßen Verfahrens, ausgebildet sein, wenigstens mit:
einer Einrichtung zum Herstellen einer Maische;
einer Einrichtung zum Trennen der Maische zur Gewinnung einer Würze, enthaltend eine Vorderwürze oder ein Gemisch aus der Vorderwürze und wenigstens einem Nachguss;
einer Einrichtung zum Heißhalten oder Kochen der in der Trenn-Einrichtung erzeugten Würze;
einer Einrichtung zum Klären der Würze;
wenigstens einer Einrichtung zum Einstellen der Temperatur bzw. Temperieren, insbesondere Kühlen, der in der Heißhalte- oder Koch-Einrichtung behandelten Würze auf eine erste Temperatur zwischen 40 und 55 °C oder zwischen 72 und 85 °C; und
einer Einrichtung zum Zugeben wenigstens einer Portion der Vorderwürze, zu der in der

Temperier-/Kühl-Einrichtung temperierten, insbesondere gekühlten Würze; wobei die Zugabe-Einrichtung stromabwärts zur Einrichtung zum Einstellen der Temperatur bzw. Temperieren, insbesondere Kühlen, der in der Heißhalte- oder Koch-Einrichtung behandelten Würze auf die erste Temperatur angeordnet ist; und
wobei die Zugabe-Einrichtung stromaufwärts oder stromabwärts zur Klär-Einrichtung angeordnet ist.

Die erfindungsgemäße Vorrichtung kann eine erste Einrichtung zum Einstellen der Temperatur, insbesondere Kühlen, der Würze nach dem Heißhalte-/Kochschritt aufweisen, welche geeignet ist, die einströmende, heiße Würze auf die erste Temperatur im Gegenstrom oder Gleichstrom zu der kühleren, aus der Klär-Einrichtung austretenden Würze zu kühlen. Letztere Würze, welche die Temperatur oder eine Temperatur geringfügig darunter aufweist, erwärmt sich dabei auf eine dritte Temperatur, welche in etwa zwischen 82 und 99 °C, vorzugsweise zwischen 82 und 95 °C, vorzugsweise zwischen 82 bis 90 °C, insbesondere zwischen 82 bis 85 °C, liegt. Durch diese erneute Erwärmung werden die Enzyme kontrolliert inaktiviert. In einem weiter stromabwärts angeordneten Würzekühler kann die Würze dann auf die zweite Temperatur, beispielsweise auf eine Anstelltemperatur gekühlt werden. Damit kann erfindungsgemäß auch die nach dem Klär-Schritt anfallende Würze vorteilhaft zur erfindungsgemäßen Vorkühlung der aus dem Heißhalte-/Kochschritt erhaltenen Würze verwendet werden. Gleichzeitig wird die die Wärme aufnehmende Würze auf die dritte Temperatur zur Enzyminaktivierung erwärmt. Durch diese Vorgehensweise bzw. diesen Aufbau wir eine energieeffiziente Verwirklichung des erfindungsgemäßen Verfahrens einschließlich einer kontrollierten Inaktivierung der zugegebenen Enzyme erzielt. Dabei kann die zur erneuten "Inaktivierungserwärmung" erforderliche Wärme vollständig aus der heißen Ausschlagwürze gewonnen werden.

Damit kann das erfindungsgemäße Verfahren und/oder die erfindungsgemäße Vorrichtung derart ausgebildet sein, dass die auf die erste Temperatur temperierte, insbesondere vorgekühlte, Würze (als Wärmeträger) zum Einstellen der Temperatur, insbesondere Kühlen der wärmeren, nach dem Heißhalten oder Kochen anfallenden Würze (z.B. Ausschlagwürze) verwendet werden kann. Dabei wird letztere Würze auf die erste Temperatur eingestellt, insbesondere abgekühlt, während die bereits früher vorgekühlte Würze vorzugsweise auf die dritte Temperatur zur Enzyminaktivierung erwärmt wird, bevor diese dann nach Verstreichen einer vorbestimmten Zeitspanne auf die zweite Temperatur, z.B. die Anstelltemperatur gekühlt wird.

Zur Steigerung der zeitlichen Flexibilität und bei diskontinuierlicher Fahrweise kann auch ein Speichergefäß für die Würze im Würzeweg nach der Klär-Einrichtung vorgesehen werden.

Bei der erfindungsgemäßen Vorrichtung kann die Einrichtung zum Einstellen der Temperatur, insbesondere Kühlen, der Würze auf die erste und/oder zweite Temperatur und/oder zum Erwärmen der Würze als ein einziger Wärmeüberträger oder zwei Wärmeüberträger ausgebildet sein.

Besteht die Einrichtung erfindungsgemäß aus nur einem Wärmeüberträger, ist der apparative Aufwand zur Umsetzung der Erfindung minimal. Besonders vorteilhaft ist es, wenn in einer bestehenden Anlage auf den bereits vorhandenen Würzekühler bei der Verwirklichung der Erfindung zurückgegriffen werden kann. Besteht die Einrichtung zum Einstellen der Temperatur, insbesondere Kühlen, der Würze aus zwei Wärmeüberträgern, so ist die Flexibilität höher und der jeweilige Wärmeüberträger kann individuell für die ihm zukommende Aufgabe ausgelegt und räumlich angeordnet werden.

Erfindungsgemäß umfasst der Begriff "Zugeben" das Mischen zweier oder mehr Fluide oder Suspensionen. Erfindungsgemäß muss der Begriff "Zugeben" jedoch nicht hierauf beschränkt sein. Er kann auch das Mischen und Homogenisieren zweier oder mehr Fluide oder Suspensionen umfassen.

Der vorstehend beschriebene Maischeauszug kann beispielsweise mit den folgenden Schritten hergestellt werden: (aa) während des Maischens (beispielsweise in Schritt (a) des Verfahrens nach Anspruch 2) Entnehmen einer Portion der Maische, wobei die Maische eine vorgegebene Temperatur aufweist; (bb) wenigstens teilweises Abtrennen von Feststoffpartikeln aus der in Schritt (aa) erhaltenen Portion der Maische, vorzugsweise durch Sedimentieren derselben, wodurch der Maischeauszug erhalten wird.

Dabei kann der Maischeauszug auch aus einem Gemisch von Maischeauszügen bestehen, welche bei unterschiedlichen, vorgegebenen Temperaturen oder in unterschiedlichen, vorgegebenen Temperaturbereichen der Maische entnommen wurden und wie beschrieben, wenigstens teilweise von Feststoffpartikeln befreit wurden. Dabei sind die Temperaturbereiche vorzugsweise folgende:

| **Temperaturbereich** | **Optimum für Enzymaktivität der** | **Wirkung/Verbesserung** |
|---|---|---|
| ca. 35 bis 40 °C | Maltase | Endvergärungsgrad; Zuckerabbau |
| ca. 40 bis 45 °C | Endo-β-1,4-Glucanase | Filtrierbarkeit/Viskosität des Bieres |
| ca. 50 bis 60 °C | Endo-β-1,3-Glucanase | Filtrierbarkeit/Viskosität des Bieres |
| ca. 50 bis 65 °C, insb. 62 bis 65 °C | β-Glucan-Solubilase | Filtrierbarkeit/Viskosität des Bieres |
| ca. 60 bis 65 °C, insb. 62 bis 64 °C | β-Amylase | Endvergärungsgrad; Stärkeabbau |
| ca. 65 bis 75 °C, insbesondere 72 bis 74 °C | α -Amylase | Erzielung Iodnormalität der Würze; Stärkeabbau |
| ca. 45 bis 50 °C | Endopeptidase, Carboxypeptidase, Aminopeptidase, Dipeptidase | Proteinabbau; verringerte Trübungsbildung im fertigen Getränk; Glutenabbau zur Erzeugung glutenfreier Getränke |

Auf Basis der in vorstehender Tabelle angegebenen Temperaturbereiche kann auch die Temperatur bei Ziehen der Portion der Maische gewählt werden.

Beim erfindungsgemäßen Verfahren erfolgt das Einstellen der Temperatur, insbesondere Kühlen, der Würze vorzugsweise unter Berücksichtigung der in vorstehender Tabelle wiedergegebenen Temperaturbereiche auf die erste Temperatur zwischen 40 und 55 °C oder zwischen 72 und 85 °C, vorzugsweise 45 bis 50 °C, insbesondere 73 bis 75 °C oder im Bereich von 78 bis 85 °C, vorzugsweise 78 bis 84 °C, vorzugsweise 80 bis 85 °C, insbesondere 80 bis 83 °C. Die in vorstehender Tabelle wiedergegebenen Temperaturbereiche können daher ebenfalls als Temperaturbereiche für die erste Temperatur verwendet werden. D.h., auf der Basis der in vorstehender Tabelle angegebenen Temperaturbereiche kann auch die erste Temperatur beim Einstellen der Temperatur, insbesondere Kühlen, der Würze nach dem Heißhalten oder Kochen gewählt werden.

Beim erfindungsgemäßen Verfahren kann die der temperierten, insbesondere vorgekühlten, Würze zugegebene Portion enthaltend eine nicht über 80 °C erwärmte, zweite Würze, vorzugsweise der Vorderwürze, demselben Sud (Maische-/Würzecharge) entstammen. Die Erfindung ist jedoch nicht notwendigerweise hierauf beschränkt. So können auch die der vorgekühlten Würze zugegebene Portion oder Portionen einem anderen (früheren oder späteren) Sud entstammen. Besonders vorteilhaft ist es dabei, wenn die zugegebene Portion einer enzymreichen zweiten Würze erfindungsgemäß einer Würze zugegeben wird, welche aus enzymarmen Rohstoffen, wie beispielsweise rohfruchtbasierte Würzen, stammt.

Die Erfindung ist nicht notwendigerweise darauf beschränkt, die Portion enthaltend eine nicht über 80 °C erwärmte, zweite Würze, vorzugsweise der Vorderwürze, einer nach dem Abschluss des Heißhaltens/Kochens temperierten, insbesondere vorgekühlten, Würze zuzugeben. Vielmehr kann eine solche Portion auch einer anderen Maischecharge zur Unterstützung des Enzympotenzials zugeführt werden, insbesondere, wenn es sich, wie vorstehend beschrieben, um enzymarme, beispielsweise rohfruchtbasierte Maischen handelt. Dabei kann wie hierin beschrieben, wenigstens eine Portion enthaltend eine nicht über 80 °C erwärmte, zweite Würze, vorzugsweise einer Vorderwürze, gewonnen werden und einer Maische zu einem beliebigen Zeitpunkt während des Maischens oder nach dem Maischen zugegeben werden oder in das Maischgefäß vor dem Einmaischen vorgelegt werden. Ansonsten ergeben sich alle weiteren Ausführungen, Eigenschaften und Vorteile dieser Variante der Erfindung anlog zur Zugabe der wenigstens einen Portion zur temperierten, insbesondere vorgekühlten, Würze wie vorstehend beschrieben. Damit lassen sich dieselben Beschränkungen in verfahrens- und vorrichtungstechnischer Sicht, wie sie für die Zugabe der Portion(en) zur temperierten, insbesondere vorgekühlten, Würze in dieser Anmeldung beschrieben sind, auch mit der vorstehend beschriebenen Zugabe der Portion(en) zu einer Maische einer anderen Maischecharge kombinieren.

Durch eine wenigstens teilweise Befreiung der Maische- oder Würzeportion von Feststoffpartikeln noch vor der Zugabe, wie dies beispielsweise bei der Erzeugung eines Maischeauszugs der Fall ist, wird nach Erkenntnis der Erfinder die Wirksamkeit des erfindungsgemäßen Verfahrens bezüglich einer Verbesserung der technologischen Eigenschaften der resultierenden Würze, zum Beispiel der Iodnormalität, erhöht. Hierbei bezieht sich Feststoffpartikeln insbesondere auf Malz-, Malzschrot- und Getreidepartikel.

In einer vorteilhaften Ausführungsform, beispielsweise zur Erzeugung glutenfreier Getränke, kann im Schritt (a) die Würze auf eine Temperatur von höchstens 55 °C (beispielsweise 40 bis 55 °C, insbesondere 45 bis 50 °C) eingestellt werden. Dabei ist es vorteilhaft, wenn das im Schritt (b) zugegebene enzymhaltige Substrat höchstens eine Temperatur von 55 °C erreicht, wenn ein Maximum an Enzymaktivität der entsprechenden Peptidasen erreicht werden soll. Möglich und erfindungsgemäß ist jedoch auch, dass die erste Temperatur, auf welche die Würze eingestellt wird, und/oder die Temperatur, welche das enzymhaltige Substrat bis zur Zugabe gemäß Schritt (b) zumindest vorrübergehend erreicht, geringfügig oberhalb (bspw. +2 bis +10 °C) der Enzymoptimumtemperatur von z.B. 55 °C liegen. Trotz der hierbei eintretenden, temperaturbedingten Enzyminaktivierung kann - vermutlich aufgrund der beschleunigten Umsetzung aufgrund der erhöhten Temperatur - dennoch ein ausreichender Abbau von Gluten erzielt werden. Um bei diesem Verfahren ein definiertes Ende der Enzymaktivität zu erzielen, kann nach dem Zugeben des enzymhaltigen Substrats und Verstreichenlassen einer vorgegebenen Zeitspanne die Würze auf eine dritte Temperatur von beispielsweise 85 °C erwärmt werden.

Erfindungsgemäß wird unter dem Begriff "Portion einer Maische" insbesondere eine Stoffportion verstanden, welche aus einer Maische besteht. Der Begriff ist jedoch nicht hierauf beschränkt, sondern kann erfindungsgemäß auch eine Stoffportion einschließen, welche Maische enthält. Insbesondere kann der erfindungsgemäße Begriff "Portion einer Maische" auch Gemische aus Maische und Wasser oder aus Maische und Maischeauszügen oder aus Maische und Würze oder dergleichen umfassen. Darüber hinaus umfasst der Begriff auch Konzentrate einer Maische. Zudem umfasst der Begriff "Portion einer Maische" auch Gemische von wenigstens zwei Maischeportionen, wobei die Maischeportionen demselben oder unterschiedlichen Suden entstammen können.

Im Lichte der vorstehenden Definition des Begriffs "Portion einer Maische" gilt Entsprechendes auch für die erfindungsgemäßen Begriffe "Portion eines Maischeauszugs" und "Portion enthaltend eine nicht über 80 °C erwärmte, zweite Würze, vorzugsweise eine Portion der Vorderwürze" und den erfindungsgemäßen Gemischen aus den Portionen. Dabei kann der Begriff "eine nicht über 80 °C erwärmte, zweite Würze" eine Vorderwürze und auch eine wässerige Verdünnung oder ein Konzentrat einer Vorderwürze und insbesondere eine mit Nachguss verdünnte Vorderwürze, also eine herkömmliche Würze oder Pfanne-voll-Würze, einschließen, solange die Würze nicht derart erwärmt wurde, insbesondere nicht über 80 °C, dass die darin enthaltenen, für den jeweiligen Anwendungsfall und für die zu erzielende Wirkung relevanten Enzyme vollständig inaktiviert oder ihre enzymatische Funktion wesentlich beeinträchtigt wurde (insbesondere Verlangsamung des Stoffumsatzes oder der Reaktionsgeschwindigkeit auf < 50 % im Vergleich zu dem Zustand der Portion ohne Erwärmung). Folglich kann erfindungsgemäß der Begriff "Portion enthaltend eine nicht über 80 °C erwärmte, zweite Würze" auch eine nicht über 80 °C erwärmte Vorderwürze, ein nicht über 80 °C erwärmtes Gemisch aus Vorderwürze und einem Nachguss oder mehreren Nachgüssen, jeweils auch in verdünnter oder konzentrierter Form, eine nicht über 80 °C erwärmte Pfanne-voll-Würze umfassen. Eine entsprechende Auslegung gilt für andere erfindungsgemäße Temperaturen.

Die Begriffe "Maische", "Maischeauszug" und "Würze" bzw. "Vorderwürze" beziehen sich erfindungsgemäß in erster Linie auf die Herstellung von Bier. Die vorliegende Erfindung muss jedoch nicht hierauf beschränkt sein, sondern kann auch die Herstellung von anderen Getränken einschließen, wie beispielsweise malzbasierte Getränke, Biermischgetränke, Whisky und sonstige Getränke, die unter Verwendung einer Maische und/oder Würze hergestellt werden können.

Dem Begriff "Pfanne-voll-Volumen" der Würze wird die brauereiübliche Bedeutung zugeordnet, insbesondere das Gesamtvolumen der Würzecharge unmittelbar vor dem oder beim Beginn der thermischen Behandlung der Würze, bspw. durch Heißhalten oder Kochen.

Erfindungsgemäß wird unter "Heißhalten" der Würze das Halten der Würze bei einer Temperatur im Bereich von größer 85 °C bis zur Kochtemperatur, beispielsweise 100 °C, verstanden.

Die in dieser Anmeldung angegebenen Temperaturangaben müssen nicht auf die exakten jeweiligen Temperaturen beschränkt sein. Die jeweils angegebenen Temperaturen können auch Temperaturen umfassen, welche um höchstens 2 °C, vorzugsweise höchstens 1 °C, von dem angegebenen Wert abweichen. So kann beispielsweise ein Wert von 80 °C auch einen Bereich von 78 bis 82 °C, vorzugsweise 79 bis 81 °C, umfassen.

Erfindungsgemäß kann der Gehalt an "Feststoffen" oder "Feststoffpartikeln" gemäß der Methode MEBAK Band II, 2002, 2.6.2, bestimmt werden.

### Beispiele der Erfindung

Vorteilhafte Ausführungsformen der Erfindung sind Gegenstand der nicht maßstäblichen Zeichnung. Darin zeigt
- Fig. 1: eine schematische Darstellung einer ersten Ausführungsform der erfindungsgemäßen Vorrichtung und des erfindungsgemäßen Verfahrens;
- Fig. 2: eine schematische Darstellung einer zweiten Ausführungsform der erfindungsgemäßen Vorrichtung und des erfindungsgemäßen Verfahrens; und
- Fig. 3: eine schematische Darstellung einer dritten Ausführungsform der erfindungsgemäßen Vorrichtung und des erfindungsgemäßen Verfahrens.

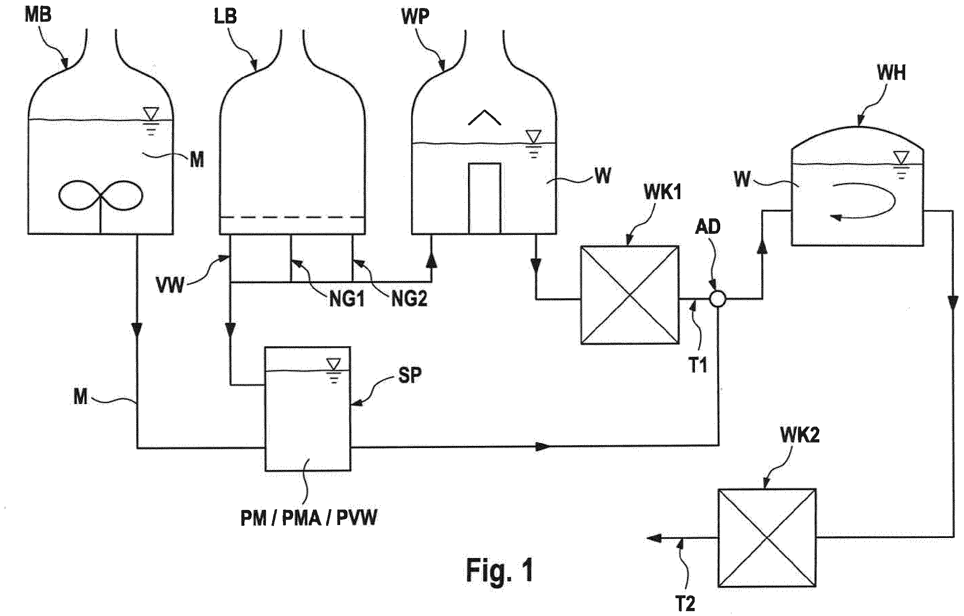

Die in Fig. 1 dargestellte Ausführungsform der erfindungsgemäßen Vorrichtung ist eine Vorrichtung zum Behandeln, vorzugsweise zum Herstellen, einer Würze W bei der Bier- oder Getränkeherstellung. Dabei weist sie eine Einrichtung MB zum Herstellen der Maische M, beispielsweise eine Maischepfanne, auf. Die Vorrichtung weist ferner einer Einrichtung LB zum Trennen der in der Einrichtung MB hergestellten Maische M auf, beispielsweise einen Läuterbottich, einen Maischefilter, einen Strainmaster, ein Trommelfilter, Scheibenfilter oder Tellerfilter, eine Siebbandpresse oder eine anderes Läutergerät zur Gewinnung einer Würze W, enthaltend eine Vorderwürze VW oder die Vorderwürze VW und wenigstens einen Nachguss NG1, NG2, NG3, .... Die Vorrichtung weist ferner eine Einrichtung WP zum Heißhalten oder Kochen der beim Trennschritt erhaltenen Würze W auf, beispielsweise eine Würzepfanne mit Innen- oder Außenkocher. Zudem weist sie eine Einrichtung AD zum Zugeben wenigstens einer Portion PM der Maische M und/oder wenigstens einer Portion PMA wenigstens eines Maischeauszugs MA und/oder einer Portion PVW einer nicht über 80 °C erwärmten, zweiten Würze W2, insbesondere der Vorderwürze VW, zu der nach dem Heißhalten oder Kochen in der Einrichtung WP erhaltenen Würze W, d.h., die Ausschlagwürze. Die Vorrichtung weist ferner eine Einrichtung WH zum Klären der nach dem Zugabe-Schritt erhaltenen Würze W auf, beispielsweise einen Whirlpool.

Ein besonderes Merkmal der erfindungsgemäßen Vorrichtung ist, dass sie eine erste Einrichtung WK1 zum Kühlen der Würze W, hier der Ausschlagwürze, auf eine erste Temperatur T1 zwischen 0 und 80 °C aufweist, beispielsweise einen Plattenwärmeüberträger. Dabei ist diese erste Würzekühler-Einrichtung WK1 stromabwärts zur Heißhalte- oder Kocheinrichtung WP und stromaufwärts zur Zugabeeinrichtung AD angeordnet. Ferner ist die Zugabeeinrichtung AD stromaufwärts zur Klärreinrichtung WH angeordnet. Die Vorrichtung sieht ferner stromabwärts zur Klär-Einrichtung WH eine zweite Einrichtung WK2 zum Kühlen der aus der Klär-Einrichtung WH abgezogenen, geklärten Würze W vor. Die zweite Einrichtung WK2 ist vorzugsweise als Plattenwärmeüberträger ausgebildet. Darin wird die Würze W, welche die erste Temperatur T1 oder eine wegen zwischenzeitlichen Strahlungsverlusten geringfügig darunterliegende Temperatur aufweist, auf eine zur Weiterverarbeitung geeignete, zweite Temperatur T2 gekühlt, beispielsweise auf eine Anstelltemperatur im Bereich von 5 bis 20 °C.

Die in Fig. 1 dargestellte Ausführungsform des erfindungsgemäßen Vorrichtung weist ferner eine Einrichtung SP zum Speichern einer Portion PM der aus der Einrichtung MB abgezogenen Maische M und/oder einer Portion PMA eines Maischeauszugs MA und/oder einer Portion PVW der aus der Trenneinrichtung LB gewonnenen, einer nicht über 80 °C erwärmten, zweiten Würze W2, insbesondere der Vorderwürze VW.

Nachfolgend wird eine Ausführungsform des erfindungsgemäßen Verfahrens anhand der in Fig. 1 dargestellten vorstehend beschriebenen, erfindungsgemäßen Vorrichtung beschrieben.

In der Maischeinrichtung MB wird in einem üblichen Verfahren unter Verwendung herkömmlicher Rohstoffe eine Maische M erzeugt. Hierzu wird beispielsweise ein Dekoktions- oder Infusionsverfahren eingesetzt. Dabei wird eine Portion PM der Maische M bei einer vorgegebenen Temperatur der Maischecharge entnommen und in der Speichereinrichtung SP gelagert. Dabei kann - je nach zu erzielender Wirkung - die Maischeprobe bei einer Temperatur gezogen werden, welche innerhalb des entsprechenden Bereichs des Temperaturoptimums gemäß der vorstehenden Tabelle liegt. Wenn beispielweise ein hinreichender β-Glucanabbau sichergestellt werden soll, so kann eine Maischeportion PM bei einer Temperatur der Maische von beispielsweise 48 °C gezogen werden, bei der die β-Glucanasen noch nicht inaktiviert sind.

Wenn beispielsweise eine hinreichende Iodnormalität erzielt werden soll, kann zusätzlich oder alternativ beispielsweise eine Vorderwürze-Portion PVW beim Abläutern gezogen werden, wobei die Temperatur der Vorderwürze vorzugsweise 76 °C nicht überschreitet. Auch die Vorderwürze-Portion PVW wird in der Speichereinrichtung SP gespeichert, beispielsweise getrennt von der Maische-Portion PM.

Die Würzebereitung wird gemäß dem herkömmlichen Verfahren mit Abläutern und Heißhalten/Kochen der Würze W fortgesetzt. Nach dem Schritt des Heißhaltens/Kochens wird die Ausschlagwürze W noch vor dem Klärschritt mittels der ersten Einrichtung WK1 auf eine erste Temperatur T1 gekühlt, die, wenn eine hinreichende Iodnormalität der Würze erzielt werden soll, vorzugsweise 74 °C beträgt. Dieser auf 74 °C vorgekühlten Würze W wird die in der Zwischenzeit gespeicherte Vorderwürze-Portion PVW zugegeben. Dabei beträgt das Volumenverhältnis von zugebener Vorderwürze-Portion PVW zum Pfanne-voll-Volumen der Würzecharge beispielsweise 2,5 %. Da die Temperatur der resultierenden Würze W, welcher die Vorderwürze-Portion PVW zugesetzt worden ist, in Temperaturoptimum der α-Amylase liegt, kann dieses Enzym seine Aktivität im anschließenden Klärschritt, d.h., bei der Abtrennung des Heißtrubs im Whirlpool, fortsetzen, sodass die Zeit der Whirlpoolrast vorteilhaft für den ergänzenden Stärkeabbau durch die mit der Vorderwürze-Portion PVW eingebrachte, aktive α-Amylase, bei dessen Temperaturoptimum genutzt werden kann.

Schon nach kurzer Einwirkzeit, beispielsweise nach 15 bis 20 Minuten, kann die Iodnormalität einer nach herkömmlichen Verfahren nicht iodnormalen Würze durch Anwendung des erfindungsgemäßen Verfahrens sichergestellt werden. Nach dem Whirlpoolschritt wird die geklärte Würze W dann in einer zweiten Einrichtung WK2, vorzugsweise ein zweiter Plattenwärmeüberträger, zur weiteren Verwendung auf die zweite Temperatur T2, beispielsweise auf die Anstelltemperatur von 15 °C, gekühlt.

Die nachfolgende Tabelle gibt einen Überblick über die erfindungsgemäße Wirkung der Erzielung der Iodnormalität durch Anwendung des erfindungsgemäßen Verfahrens wieder.

| Probe-Nr. | Art der Probe | Iodwert, gemessen x min nach Zugabe der Vorderwürze-Portion PVW oder eines künstlichen Enzympräparats | | |
|---|---|---|---|---|
| | | x = 15 min | x = 20 min | x = 25 min |
| 1 | 200 ml Würze, herkömmlich hergestellt und ohne Zugabe | 9,44 | | |
| 2 | 200 ml Würze, erfindungsgemäß hergestellt (+ 5 ml Vorderwürze (2,5 %)) | 0,577 | 0,548 | 0,550 |
| 3 | 200 ml Würze, erfindungsgemäß hergestellt (+ 15 ml | 0,621 | 0,453 | 0,540 |
| | Vorderwürze (7,5 %)) | | | |
| 4 | 200 ml Würze, herkömmlich hergestellt, mit Zugabe von 10 mg thermostabiler α-Amylase | 0,585 | 0,543 | 0,515 |

Dabei ist die Probe-Nr. 1 eine herkömmlich hergestellte, nicht iodnormale Würze mit einem Iodwert von 9,44 auf. Bei Sudhausabnahmen werden Iodwerte in gepufferten Systemen als akzeptabel angesehen, welche im Bereich von 0,45 liegen.

Probe-Nr. 2 ist eine erfindungsgemäß hergestellte Würze W, welche gemäß dem vorstehend beschriebenen ersten Ausführungsbeispiel hergestellt wurde und eine Portion Vorderwürze PVW in einem Volumenanteil von 2,5 % der vorgekühlten Würze W zugegeben wurde. Probe-Nr. 3 ist ebenfalls eine erfindungsgemäß hergestellte Würze W, dieser wurde nach Vorkühlung 7,5 % Vorderwürze zugegeben. Probe-Nr. 4 ist die herkömmliche Würze wie Probe-Nr. 1, welcher eine kommerziell erhältliche, thermostabile α-Amylase zugesetzt wurde.

Der Vergleich der erfindungsgemäß hergestellten Würzen mit der Würze, welche eine thermostabile α-Amylase zugegeben wurde, zeigt, dass das erfindungsgemäße Verfahren zu einem vergleichbaren Stärkeabbau führt, wie sie durch die Zugabe einer kommerziellen, thermostabilen α-Amylase erzielt werden kann. Dabei ist eine Einwirkzeit von 15 Minuten bereits ausreichend, um einen akzeptablen Iodwert zu erreichen. Noch geringere Iodwerte werden bei einer Einwirkzeit von etwa 20 Minuten erzielt.

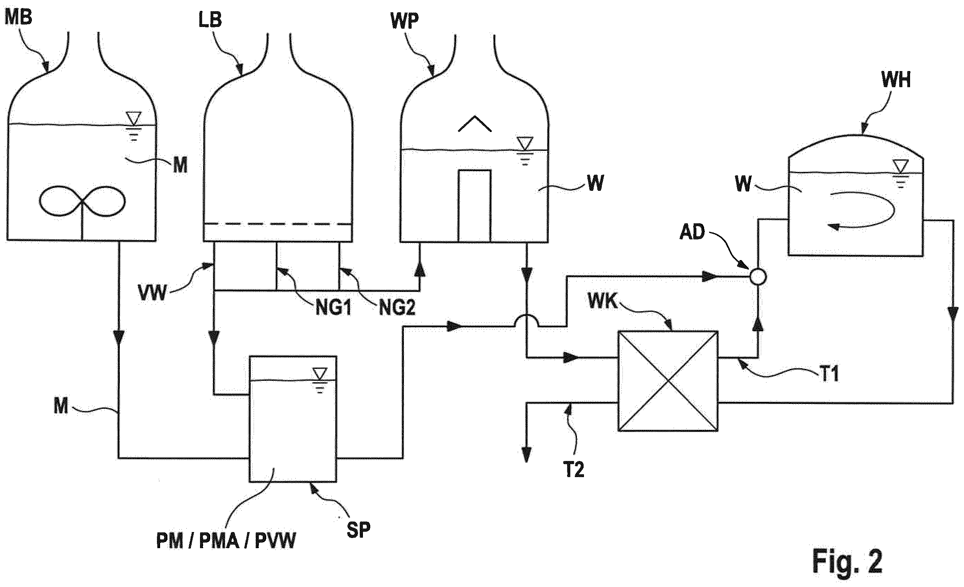

Die in Fig. 2 dargestellte, zweite Ausführungsform der erfindungsgemäßen Vorrichtung weist grundsätzlich denselben Aufbau wie die vorstehend beschriebene, erste Ausführungsform auf. Daher werden nachfolgend nur die Unterschiede zur ersten Ausführungsform beschrieben.

Gemäß der zweiten Ausführungsform sind die erste Einrichtung WK1 zum Kühlen der Würze W nach dem Heißhalte-/Kochschritt und die zweite Einrichtung WK2 zum Kühlen der Würze W nach den Whirlpoolschritt zu einer einzigen Einrichtung WK, beispielsweise ein ein- oder mehrstufiger Plattenwärmeüberträger, zusammengefasst. Anders gesagt, kann für die Vorkühlung der Würze W wie auch für die weitere Kühlung der Würze W auf Anstelltemperatur derselbe Würzekühler WK verwendet werden. Hierdurch wird die Anschaffung einer zweiten Kühleinrichtung vorteilhaft vermieden und die Kosten reduziert. Dabei werden die Funktionen der ersten Einrichtung WK1 und der zweite Einrichtung WK2 in der gemeinsamen Einrichtung WK zumeist zeitversetzt ausgeführt. Es ist aber auch eine zeitgleiche Ausführung beider Funktionen realisierbar.

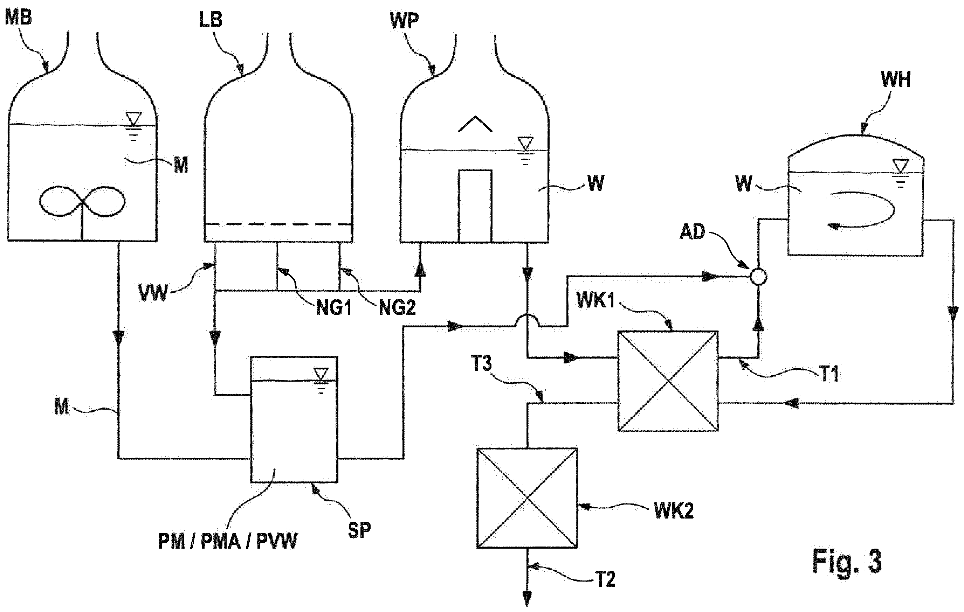

Die in Fig. 3 dargestellte, dritte Ausführungsform der erfindungsgemäßen Vorrichtung weist grundsätzlich denselben Aufbau wie die vorstehend beschriebene, zweite Ausführungsform auf. Daher werden nachfolgend nur die Unterschiede zur ersten Ausführungsform beschrieben. Die dritte Ausführungsform ist insbesondere für die Verwirklichung eines kontinuierlichen, erfindungsgemäßen Verfahrens gedacht.

Diese Ausführungsform weist ebenfalls eine erste Einrichtung WK1 zum Kühlen der Würze W nach dem Heißhalte-/Kochschritt in der Einrichtung WP auf. Dabei wird die Würze W auf die Temperatur T1 im Gegen- oder Gleichstrom mit der aus der Klär-Einrichtung WH austretenden Würze, welche die Temperatur T1 oder eine Temperatur geringfügig darunter aufweist, abgekühlt. Dabei erwärmt sich der entgegenströmende Würzestrom W auf eine dritte Temperatur T3, welche in etwa zwischen 82 und 95 °C, vorzugsweise 82 bis 90 °C, insbesondere 82 bis 85 °C, liegt. Durch diese erneute Erwärmung werden die Enzyme kontrolliert inaktiviert. Folglich dient die erste Einrichtung WK1 gleichzeitig als eine Einrichtung WE zum Erwärmen der Würze W.

Im stromabwärts angeordneten Würzekühler WK2 wird dann die Würze, wie zuvor beschreiben, auf die zweite Temperatur T2, beispielsweise auf die Anstelltemperatur von 15 °C, gekühlt. Durch diesen Aufbau wir eine energieeffiziente Verwirklichung des erfindungsgemäßen Verfahrens möglich.

Zur Steigerung der zeitlichen Flexibilität und bei diskontinuierlicher Fahrweise kann auch ein Speichergefäß für die Würze W im Würzeweg vorgesehen sein (nicht dargestellt).

## Patentansprüche

1. Verfahren zum Behandeln oder Herstellen einer Würze (W) bei der Bier- oder Getränkeherstellung, wenigstens mit den Schritten:
(a) nach Abschluss des Heißhaltens oder Kochens der Würze (W), Einstellen der Temperatur, insbesondere Kühlen, der Würze (W) auf eine erste Temperatur (T1) zwischen 40 und 55 °C oder zwischen 72 und 85 °C; und
(b) Zugeben wenigstens einer Portion (PVW) enthaltend eine nicht über 80 °C erwärmte, zweite Würze (W2), insbesondere einer Portion (PVW) einer Vorderwürze (VW), zur Würze (W);
wobei die Würze (W) beim Zugeben höchstens die erste Temperatur (T1) aufweist;
wobei das Verfahren vor dem Einstellen der Temperatur der Würze (W) auf die erste Temperatur (T1) ferner die nachfolgenden Schritte umfasst:
Bereitstellen einer Maische (M);
Trennen der Maische (M) zur Gewinnung der Würze (W), enthaltend eine Vorderwürze (VW) oder ein Gemisch aus der Vorderwürze (VW) und wenigstens einem Nachguss (NG1, NG2, NG3, ...);
wobei das Trennen der Maische (M) mittels Oberflächenfiltration erfolgt; und
Heißhalten oder Kochen der Würze (W).

2. Verfahren nach Anspruch 1, **dadurch gekennzeichnet, dass** das Verfahren ferner den Schritt umfasst:
wenigstens teilweises Klären der Würze (W);
wobei das Zugeben gemäß Schritt (b) vorzugsweise vor dem wenigstens teilweisen Klären der Würze (W) erfolgt.

3. Verfahren nach Anspruch 1 oder 2, **dadurch gekennzeichnet, dass** das Verfahren nach dem Zugeben gemäß Schritt (b) und/oder Klären ferner den Schritt umfasst:
Kühlen der Würze (W) auf eine zweite Temperatur (T2) zwischen der ersten Temperatur (T1) und 0 °C.

4. Verfahren nach einem der Ansprüche 1 bis 3, **dadurch gekennzeichnet, dass** die erste Temperatur (T1) in einem Bereich von 45 bis 50 °C; , vorzugsweise 80 bis 85 °C; vorzugsweise 72 bis 78 °C, vorzugsweise 72 bis 76 °C, vorzugsweise 73 bis 75 °C, insbesondere bei etwa 74 °C, liegt.

5. Verfahren nach einem der Ansprüche 1 bis 4, **dadurch gekennzeichnet, dass** das Verfahren ferner den Schritt umfasst:
nach dem Zugeben und Verstreichenlassen einer vorgegebenen Zeitspanne Erwärmen der Würze (W) auf eine dritte Temperatur (T3) zwischen 82 und 99 °C, vorzugsweise zwischen 82 bis 95 °C, vorzugsweise zwischen 82 bis 90 °C, insbesondere zwischen 82 bis 85 °C.

6. Verfahren nach einem der Ansprüche 1 bis 5, **dadurch gekennzeichnet, dass** das Verhältnis des Volumens der zugegebenen Portion (PVW) zum Pfanne-voll-Volumen der Würze (W) in einem Bereich von 0,1 bis 30 %, vorzugsweise von 0,5 bis 20 %, vorzugsweise von 1 bis 5 %, vorzugsweise von 1 bis 3 %, insbesondere etwa 2 %, ist.

7. Verfahren nach einem der Ansprüche 1 bis 6, **dadurch gekennzeichnet, dass** die Portion (PVW) vor dem Zugeben gemäß Schritt (b) zwischengelagert wird.

8. Verfahren nach einem der Ansprüche 1 bis 7, **dadurch gekennzeichnet, dass** das Einstellen der Temperatur, insbesondere Kühlen, der Würze (W) auf die erste Temperatur (T1) und/oder das Kühlen der Würze (W) auf die zweite Temperatur (T2) und/oder das Erwärmen der Würze (W) auf die dritte Temperatur (T3) in demselben Wärmeüberträger durchgeführt werden.

9. Vorrichtung zum Behandeln oder Herstellen einer Würze (W) bei der Bier- oder Getränkeherstellung, vorzugsweise zur Durchführung des Verfahrens nach einem der Ansprüche 1 bis 8, wenigstens mit:
einer Einrichtung (LB) zum Trennen einer Maische (M) zur Gewinnung der Würze (W), wobei die Einrichtung (LB) ein Läutergerät ist, bei welchem das Trennen der Maische (M) überwiegend oder vollständig auf dem Prinzip der Oberflächenfiltration beruht;
einer Einrichtung (WK) zum Einstellen der Temperatur, insbesondere Kühlen, der Würze (W) auf eine erste Temperatur (T1) zwischen 40 und 55 °C oder zwischen 72 und 85 °C nach Abschluss des Heißhaltens oder Kochens der Würze (W); und
einer Einrichtung (AD) zum Zugeben wenigstens einer Portion (PVW) enthaltend eine nicht über 80 °C erwärmte, zweite Würze (W2), vorzugsweise einer Portion (PVW) einer Vorderwürze (VW), zu der nach dem Einstellen, insbesondere Kühlen, auf die erste Temperatur (T1) erhaltene Würze (W);
wobei die Einrichtung (WK) stromabwärts zu einer Einrichtung (WP) zum Heißhalten oder Kochen der Würze (W) angeordnet ist; und
wobei die Einrichtung (AD) stromabwärts zur Einrichtung (WK) zum Einstellen der Temperatur, insbesondere Kühlen, der Würze (W) auf die erste Temperatur (T1) angeordnet ist.

10. Vorrichtung nach Anspruch 9, **dadurch gekennzeichnet, dass** die Einrichtung (AD) stromaufwärts zu einer Einrichtung (WH) zum Klären der Würze (W) angeordnet ist.

11. Vorrichtung nach Anspruch 9 oder 10, **dadurch gekennzeichnet, dass** die Vorrichtung ferner wenigstens eine der nachfolgenden Einrichtungen aufweist:
eine Einrichtung (MB) zum Herstellen einer Maische (M);
eine Einrichtung (LB) zum Trennen der Maische (M) zur Gewinnung einer Würze (W), enthaltend eine Vorderwürze (VW) oder ein Gemisch aus der Vorderwürze (VW) und wenigstens einem Nachguss (NG1, NG2, NG3, ...);
eine Einrichtung (WP) zum Heißhalten oder Kochen der in der Einrichtung (LB) erzeugten Würze (W);
eine Einrichtung (WH) zum Klären der Würze (W); und
eine Einrichtung (WK) zum Kühlen der in der Einrichtung (WH) behandelten Würze (W) auf eine zweite Temperatur (T2) zwischen der ersten Temperatur (T1) und 0 °C;
wobei die Einrichtung (AD) vorzugsweise stromaufwärts zur Einrichtung (WH) zum Klären der Würze (W) angeordnet ist.

12. Vorrichtung nach einem der Ansprüche 9 bis 11, **dadurch gekennzeichnet, dass** die Vorrichtung ferner eine Einrichtung (WE) zum Erwärmen der Würze (W) auf eine dritte Temperatur (T3) zwischen 82 und 99 °C, vorzugsweise zwischen 82 und 95 °C, vorzugsweise zwischen 82 bis 90 °C, insbesondere zwischen 82 bis 85 °C, aufweist;
wobei die Einrichtung (WE) stromabwärts zur Einrichtung (AD) zum Zugeben und vorzugsweise stromabwärts zur Einrichtung (WH) zum Klären angeordnet ist.

13. Vorrichtung nach einem der Ansprüche 9 bis 12, **dadurch gekennzeichnet, dass** die Vorrichtung ferner wenigstens eine Einrichtung (SP) zum Abziehen und/oder Speichern der wenigstens einen Portion (PVW) enthaltend eine nicht über 80 °C erwärmte, zweite Würze (W2), vorzugsweise der Portion (PVW) der Vorderwürze (VW), aufweist.

14. Verwendung einer Einrichtung (WK) zum Einstellen der Temperatur, insbesondere Kühlen, einer Würze (W) auf eine erste Temperatur (T1) zwischen 40 und 55 °C oder zwischen 72 und 85 °C nach Abschluss des Heißhaltens oder Kochens der Würze (W); wobei die Würze (W) durch Trennen einer Maische (M) gewonnen wird, wobei das Trennen der Maische (M) durch ein Läutergerät erfolgt, bei welchem das Trennen der Maische (M) überwiegend oder vollständig auf dem Prinzip der Oberflächenfiltration beruht; und
einer Einrichtung (AD) zum Zugeben wenigstens einer Portion (PVW) enthaltend eine nicht über 80 °C erwärmte, zweite Würze (W2), insbesondere einer Portion (PVW) einer Vorderwürze (VW), zur Würze (W) nach dem Einstellen der Temperatur, insbesondere Kühlen, der Würze (W) auf die erste Temperatur (T1);
wobei die Würze (W) beim Zugeben höchstens die erste Temperatur (T1) aufweist;
vorzugsweise in einem Verfahren zum Behandeln oder Herstellen einer Würze (W) bei der Bier- oder Getränkeherstellung.

15. Verwendung nach Anspruch 14, **dadurch gekennzeichnet, dass** das Zugeben vorzugsweise vor dem wenigstens teilweisen Klären der Würze (W) erfolgt.

## Claims

1. Method for treating or preparing a wort (W) in the production of beer or beverages, at least comprising the steps of:
(a) after completion of keeping-hot or boiling the wort (W), adjusting the temperature, in particular cooling, of the wort (W) to a first temperature (T1) between 40 and 55 °C or between 72 and 85 °C; and
(b) adding at least one portion (PVW) containing a second wort (W2) not heated above 80 °C, in particular a portion (PVW) of a first wort run-off (VW), to the wort (W); wherein the wort (W) comprises at most the first temperature (T1) when adding; wherein the method further includes the following steps prior to adjusting the temperature of the wort (W) to the first temperature (T1):
providing a mash (M);
separating the mash (M) to obtain the wort (W) containing a first wort run-off (VW) or a mixture of the first wort run-off (VW) and at least one second wort (NG1, NG2, NG3, ...);
wherein the separation of the mash (M) is performed by means of surface filtration; and
keeping-hot or boiling the wort (W).

2. The method according to claim 1, **characterized in that** the method further includes the step of:
at least partially clarifying the wort (W);
wherein the addition according to step (b) preferably takes place before at least partially clarifying the wort (W).

3. The method according to claim 1 or 2, **characterized in that** the method further includes, after adding according to step (b) and/or clarifying, the step of:
cooling the wort (W) to a second temperature (T2) between the first temperature (T1) and 0°C.

4. The method according to any one of claims 1 to 3, **characterized in that** the first temperature (T1) is in a range of 45 to 50 °C; preferably 80 to 85 °C; preferably 72 to 78 °C, preferably 72 to 76 °C, preferably 73 to 75 °C, more preferably about 74 °C.

5. The method according to any one of claims 1 to 4, **characterized in that** the method further includes the step of:
after adding and allowing a predetermined period of time to elapse, heating the wort (W) to a third temperature (T3) between 82 and 99 °C, preferably between 82 and 95 °C, preferably between 82 and 90 °C, more particularly between 82 and 85 °C.

6. The method according to any one of claims 1 to 5, **characterized in that** the ratio of the volume of the portion (PVW) added to the kettle-full volume of the wort (W) is in a range from 0.1 to 30 %, preferably from 0.5 to 20 %, preferably from 1 to 5 %, preferably from 1 to 3 %, in particular about 2 %.

7. The method according to one of the claims 1 to 6, **characterised in that** the portion (PVW) is temporarily stored before being added according to step (b).

8. The method according to one of the claims 1 to 7, **characterised in that** the adjusting of the temperature, in particular cooling, of the wort (W) to the first temperature (T1) and/or the cooling of the wort (W) to the second temperature (T2) and/or the heating of the wort (W) to the third temperature (T3) are performed in the same heat exchanger.

9. Device for treating or producing a wort (W) in the production of beer or beverage, preferably for performing the method according to any one of claims 1 to 8, at least comprising:
a means (LB) for separating a mash (M) for obtaining the wort (W), wherein the means (LB) is a straining apparatus in which the separation of the mash (M) is predominantly or completely based on the principle of surface filtration;
a means (WK) for adjusting the temperature, in particular cooling, of the wort (W) to a first temperature (T1) between 40 and 55 °C or between 72 and 85 °C after completion of the keeping-hot or boiling of the wort (W); and
a means (AD) for adding at least one portion (PVW) containing a second wort (W2) not heated above 80 °C, preferably a portion (PVW) of a first wort run-off (VW), to the wort (W) obtained after adjusting, in particular cooling, to the first temperature (T1);
wherein the means (WK) is arranged downstream of a means (WP) for keeping the wort (W) hot or boiling; and
wherein the means (AD) is arranged downstream of the means (WK) for adjusting the temperature, in particular cooling, of the wort (W) to the first temperature (T1).

10. The device according to claim 9, **characterized in that** the means (AD) is arranged upstream of a means (WH) for clarifying the wort (W).

11. The device according to claim 9 or 10, **characterized in that** the device further comprises at least one of the following means:
a means (MB) for preparing a mash (M);
a means (LB) for separating the mash (M) to obtain a wort (W) containing a first wort run-off (VW) or a mixture of the first wort run-off (VW) and at least one second wort (NG1, NG2, NG3, ...);
a means (WP) for keeping-hot or boiling the wort (W) produced in the means (LB);
a means (WH) for clarifying the wort (W); and
a means (WK) for cooling the wort (W) treated in said means (WH) to a second temperature (T2) between said first temperature (T1) and 0 °C;
wherein the means (AD) is preferably arranged upstream of the means (WH) for clarifying the wort (W).

12. The device according to any one of claims 9 to 11, **characterized in that** the device further comprises means (WE) for heating the wort (W) to a third temperature (T3) between 82 and 99 °C, preferably between 82 and 95 °C, preferably between 82 and 90 °C, in particular between 82 and 85 °C;
wherein the means (WE) is arranged downstream of the means (AD) for adding and preferably downstream of the means (WH) for clarifying.

13. The device according to any one of claims 9 to 12, **characterized in that** the device further comprises at least one means (SP) for withdrawing and/or storing the at least one portion (PVW) containing a second wort (W2) not heated above 80 °C, preferably the portion (PVW) of the first wort run-off (VW).

14. Use of a means (WK) for adjusting the temperature, in particular cooling, of a wort (W) to a first temperature (T1) between 40 and 55 °C or between 72 and 85 °C after completion of keeping-hot or boiling of the wort (W); wherein the wort (W) is obtained by separation of a mash (M), the separation of the mash (M) being carried out by a straining apparatus in which the separation of the mash (M) is mainly or completely based on the principle of surface filtration; and
a means (AD) for adding at least one portion (PVW) containing a second wort (W2) not heated above 80 °C, in particular a portion (PVW) of a first wort run-off (VW), to the wort (W) after adjusting the temperature, in particular cooling, of the wort (W) to the first temperature (T1);
wherein the wort (W) comprises at most the first temperature (T1) when adding;
preferably in a method for treating or preparing a wort (W) in the production of beer or beverages.

15. The use according to claim 14, **characterized in that** the addition preferably takes place before at least partially clarifying the wort (W).

## Revendications

1. Procédé de traitement ou de fabrication d'un moût (W) lors de la fabrication de bière ou de boisson, au moins avec les étapes consistant à :
(a) à la fin du maintien au chaud ou de la cuisson du moût (W), régler la température, en particulier le refroidissement, du moût (W) à une première température (T1) entre 40 et 55 °C ou entre 72 et 85 °C ; et
(b) ajouter au moins une portion (PVW) contenant un second moût (W2) non chauffé à plus de 80 °C, en particulier une portion (PVW) d'un avant-moût (VW), au moût (W) ;
dans lequel le moût (W) présente lors de l'ajout au plus la première température (T1) ;
dans lequel le procédé comporte de plus avant le réglage de la température du moût (W) à la première température (T1) les étapes suivantes consistant à :
fournir une pâte (M) ;
séparer la pâte (M) pour l'obtention du moût (W), contenant un avant-moût (VW) ou un mélange de l'avant-moût (VW) et au moins un moût secondaire (NG1, NG2, NG3, ...) ;
dans lequel la séparation de la pâte (M) est effectuée au moyen de la filtration de surface ; et
maintenir à chaud ou cuire le moût (W).

2. Procédé selon la revendication 1, **caractérisé en ce que** le procédé comporte de plusl'étape consistant à :
clarifier au moins partiellement le moût (W) ;
dans lequel l'ajout selon l'étape (b) est de préférence effectué avant la clarification au moins partielle du moût (W).

3. Procédé selon la revendication 1 ou 2, **caractérisé en ce que** le procédé comporte de plus après l'ajout selon l'étape (b) et/ou la clarification l'étape consistant à :
refroidir le moût (W) à une deuxième température (T2) entre la première température (T1) et 0 °C.

4. Procédé selon l'une quelconque des revendications 1 à 3, **caractérisé en ce que** la première température (T1) se trouve dans une plage de 45 à 50 °C ; de préférence de 80 à 85 °C ; de préférence de 72 à 78 °C, de préférence de 72 à 76 °C, de préférence de 73 à 75 °C, en particulier à environ 74 °C.

5. Procédé selon l'une quelconque des revendications 1 à 4, **caractérisé en ce que** le procédé comporte de plus l'étape consistant à :
après l'ajout et le passage d'un intervalle prédéfini, chauffer le moût (W) à une troisième température (T3) entre 82 et 99 °C, de préférence entre 82 et 95 °C, de préférence entre 82 et 90 °C, en particulier entre 82 et 85 °C.

6. Procédé selon l'une quelconque des revendications 1 à 5, **caractérisé en ce que** le rapport entre le volume de la portion ajoutée (PVW) et le volume plein de creuset du moût (W) est dans une plage de 0,1 à 30 %, de préférence de 0,5 à 20 %, de préférence de 1 à 5 %, de préférence de 1 à 3 %, en particulier d'environ 2 %.

7. Procédé selon l'une quelconque des revendications 1 à 6, **caractérisé en ce que** la portion (PVW) est entreposée avant l'ajout selon l'étape (b).

8. Procédé selon l'une quelconque des revendications 1 à 7, **caractérisé en ce que** le réglage de la température, en particulier le refroidissement, du moût (W) à la première température (T1) et/ou le refroidissement du moût (W) à la deuxième température (T2) et/ou le chauffage du moût (W) à la troisième température (T3) sont réalisés dans le même échangeur de chaleur.

9. Dispositif de traitement ou de fabrication d'un moût (W) lors de la fabrication de bière ou de boisson, de préférence pour la réalisation du procédé selon l'une quelconque des revendications 1 à 8, au moins avec :
un appareil (LB) pour la séparation d'une pâte (M) pour l'obtention du moût (W), dans lequel l'appareil (LB) est un appareil de clarification, pour lequel la séparation de la pâte (M) repose principalement ou complètement sur le principe de la filtration de surface ;
un appareil (WK) pour le réglage de la température, en particulier le refroidissement, du moût (W) à une première température (T1) entre 40 et 55 °C ou entre 72 et 85 °C à la fin du maintien au chaud ou de la cuisson du moût (W) ; et
un appareil (AD) pour l'ajout au moins d'une portion (PVW) contenant un second moût (W2) non chauffé à plus de 80 °C, de préférence une portion (PVW) d'un avant-moût (VW), au moût (W) obtenu après le réglage, en particulier le refroidissement, à la première température (T1) ;
dans lequel l'appareil (WK) est agencé en aval d'un appareil (WP) pour le maintien à chaud ou la cuisson du moût (W) ; et
dans lequel l'appareil (AD) est agencé en aval de l'appareil (WK) pour le réglage de la température, en particulier le refroidissement, du moût (W) à la première température (T1).

10. Dispositif selon la revendication 9, **caractérisé en ce que** l'appareil (AD) est agencé en amont d'un appareil (WH) pour la clarification du moût (W).

11. Dispositif selon la revendication 9 ou 10, **caractérisé en ce que** le dispositif présente de plus au moins un des appareils suivants :
un appareil (MB) pour la fabrication d'une pâte (M) ;
un appareil (LB) pour la séparation de la pâte (M) pour l'obtention d'un moût (W), contenant un avant-moût (VW) ou un mélange de l'avant-moût (VW) et au moins un moût secondaire (NG1, NG2, NG3, ...) ;
un appareil (WP) pour le maintien à chaud ou la cuisson du moût (W) généré dans l'appareil (LB) ;
un appareil (WH) pour la clarification du moût (W) ; et
un appareil (WK) pour le refroidissement du moût (W) traité dans l'appareil (WH) à une deuxième température (T2) entre la première température (T1) et 0 °C ;
dans lequel l'appareil (AD) est de préférence agencé en amont de l'appareil (WH) pour la clarification du moût (W).

12. Dispositif selon l'une quelconque des revendications 9 à 11, **caractérisé en ce que** le dispositif présente de plus un appareil (WE) pour le chauffage du moût (W) à une troisième température (T3) entre 82 et 99 °C, de préférence entre 82 et 95 °C, de préférence entre 82 et 90 °C, en particulier entre 82 et 85 °C ;
dans lequel l'appareil (WE) est agencé en aval de l'appareil (AD) pour l'ajout et de préférence en aval de l'appareil (WH) pour la clarification.

13. Dispositif selon la revendication 9 ou 10, **caractérisé en ce que** le dispositif présente de plus au moins un appareil (SP) pour le retrait et/ou le stockage d'au moins une portion (PVW) contenant un second moût (W2) non chauffé à plus de 80 °C, de préférence la portion (PVW) de l'avant-moût (VW).

14. Utilisation d'un appareil (WK) pour le réglage de la température, en particulier le refroidissement, d'un moût (W) à une première température (T1) entre 40 et 55 °C ou entre 72 et 85 °C à la fin du maintien au chaud ou de la cuisson du moût (W) ; dans laquelle le moût (W) est obtenu par séparation d'une pâte (M), dans laquelle la séparation de la pâte (M) est effectuée par un appareil de clarification, pour lequel la séparation de la pâte (M) repose principalement ou complètement sur le principe de la filtration de surface ; et
un appareil (AD) pour l'ajout au moins d'une portion (PVW) contenant un second moût (W2) non chauffé à plus de 80 °C, en particulier une portion (PVW) d'un avant-moût (VW), au moût (W) après le réglage de la température, en particulier le refroidissement, du moût (W) à la première température (T1) ;
dans lequel le moût (W) présente lors de l'ajout au plus la première température (T1) ; de préférence dans un procédé de traitement ou de fabrication d'un moût (W) lors de la fabrication de bière ou de boisson.

15. Utilisation selon la revendication 14, **caractérisée en ce que** l'ajout est de préférence effectué avant la clarification au moins partielle du moût (W).
